# EUROPEAN PATENT SPECIFICATION

(11) **EP 2 744 260 B1**
(45) Date of publication and mention of the grant of the patent: **11.10.2017**
(21) Application number: 12829317.2
(22) Date of filing: 21.08.2012
(51) Int. Cl.: H04W 28/08

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(30) Priority: 06.09.2011 CN 201110262551
(43) Date of publication of application: 18.06.2014
(73) Proprietor: Huawei Technologies Co., Ltd., Longgang District Shenzhen, Guangdong 518129 (CN)
(72) Inventor: QUAN, Wei, Shenzhen Guangdong 518129 (CN); JIANG, Yi, Shenzhen Guangdong 518129 (CN); ZHANG, Jian, Shenzhen Guangdong 518129 (CN); ZHANG, Peng, Shenzhen Guangdong 518129 (CN); HAN, Guanglin, Shenzhen Guangdong 518129 (CN)
(74) Representative: Maiwald Patentanwalts GmbH
(86) International application number: PCT/CN2012/080399
(87) International publication number: WO 2013/034052

(56) References cited:
- WO-A1-2006/052171
- WO-A1-2010/079715
- WO-A1-2010/079715
- WO-A1-2011/098659
- CN-A- 101 720 107
- CN-A- 102 143 498
- US-A1- 2009 318 124

## Description

### TECHNICAL FIELD

The present invention relates to a wireless communications technology, and in particular, to data transmission methods, a radio access device and a user equipment.

### BACKGROUND

Currently, for an evolved packet system (Evolved Packet System, EPS), an air interface is implemented by using a Long Term Evolution (Long Term Evolution, LTE) technology and deploying an evolved base station (evolved NodeB, eNodeB). When a user equipment (User Equipment, UE) uses a service on the EPS system, the UE performs LTE air interface transmission through an eNodeB deployed on a network.

A wireless local area network (Wireless Local Area Network, WLAN) is a system that uses a radio frequency (Radio Frequency, RF) technology to perform data transmission. As a WLAN standard, a Wireless Fidelity (Wireless Fidelity, WIFI) network is a wireless network formed by an access point (Access Point, AP) and a wireless network interface card. The AP, also called a network bridge, is a bridge between a wired local area network and the wireless local area network. A terminal on which a network interface card is installed is capable of accessing the wired local area network and even a wide area network through the AP.

As bandwidth requirements are rising, to increase transmission bandwidth on an air interface, a network operator may deploy more LTE base stations. However, this leads to an increase in investment costs and maintenance costs. If only a WIFI technology is used, a service of the UE is not handed over seamlessly because of a poor coverage, thereby degrading user experience.

WO 2010/079715 A1 describes a communication system with a mobile station and a network station, wherein the mobile station is configured to use two different radio communication links to transmit data to or receive data from the network station. The two different radio communication links can be used simultaneously.

### SUMMARY

Embodiments of the present invention provide a data transmission method and device, so as to increase transmission bandwidth on an air interface, reduce costs, and improve user experience.

According to one aspect, an embodiment of the present invention provides a data transmission method, including:
determining, by a first radio access device, a user equipment UE on which traffic offload is required, and sending a traffic offload configuration message to the UE, so that after receiving the traffic offload configuration message, the UE acquires information about a radio bearer RB on which traffic offload can be performed, where data that requires traffic offload and is a part of data corresponding to the RB on which traffic offload can be performed is called second data, wherein the second data is a part of data required to be transmitted between a network side and the UE, and the other part of the data required to be transmitted is called first data;
receiving, by the first radio access device, a traffic offload configuration completion message sent by the UE, where the traffic offload configuration completion message includes information about a second radio access device associated with the UE;
establishing, by the first radio access device, a user plane channel between the first radio access device and the second radio access device according to the information about the second radio access device;
transmitting, by the first radio access device, the first data to the UE over an air interface of a first radio access technology between the first radio access device and the UE, where the first radio access technology is corresponding to the first radio access device; and
transmitting, by the first radio access device, the second data to the UE over an air interface of a second radio access technology between the second radio access device and the UE and through the user plane channel between the first radio access device and the second radio access device, where the second radio access technology is corresponding to the second radio access device,
wherein, after the sending a traffic offload configuration message to the UE, the method further comprises:
   sending, by the first radio access device, a message for modifying traffic offload configuration to the UE, wherein the message for modifying traffic offload configuration comprises information about an updated RB on which traffic offload can be performed;
   receiving, by the first radio access device, a message about completion of modifying traffic offload configuration sent by the UE, wherein the message about completion of modifying traffic offload configuration is sent by the UE after the UE completes configuration according to the information about the updated RB on which traffic offload can be performed;
   transmitting, by the first radio access device, updated second data to the UE over the air interface of the second radio access technology between the second radio access device and the UE and through the user plane channel between the first radio access device and the second radio access device, wherein the updated second data is data corresponding to the updated RB; and
   transmitting, by the first radio access device, updated first data to the UE over the air interface of the first radio access technology between the first radio access device and the UE, wherein the updated first data is data except the updated second data in the data required to be transmitted between the network side and the UE.

According to another aspect, an embodiment of the present invention provides a data transmission method, including:
receiving, by a UE, a traffic offload configuration message sent by a first radio access device;
acquiring, by the UE, information about an RB on which traffic offload can be performed, where data that requires traffic offload and is a part of data corresponding to the RB on which traffic offload can be performed is called second data, wherein the second data is a part of data required to be transmitted between a network side and the UE, and the other part of the data required to be transmitted is called first data;
sending, by the UE, a traffic offload configuration completion message corresponding to the traffic offload configuration message to the first radio access device, where the traffic offload configuration completion message includes information about a second radio access device associated with the UE, so that the first radio access device establishes a user plane channel between the first radio access device and the second radio access device according to the information about the second radio access device;
transmitting, by the UE, the first data to the first radio access device over an air interface of a first radio access technology between the first radio access device and the UE, where the first radio access technology is corresponding to the first radio access device; and
transmitting, by the UE, the second data to the first radio access device over an air interface of a second radio access technology between the second radio access device and the UE and through the user plane channel, where the second radio access technology is corresponding to the second radio access device,
after the receiving a traffic offload configuration message sent by a first radio access device, further comprising:
   receiving, by the UE, a message for releasing traffic offload configuration and sent by the first radio access device;
   determining, by the UE, not to transmit data to the second radio access device any more, and sending a message about completion of releasing traffic offload configuration to the first radio access device; and
   transmitting, by the UE to the first radio access device over the air interface of the first radio access technology between the first radio access device and the UE, the data required to be transmitted between the network side and the UE.

According to one aspect, an embodiment of the present invention provides a radio access device, serving as a first radio access device, including:
a determining and sending module, configured to determine a UE on which traffic offload is required, and send a traffic offload configuration message to the UE, so that after receiving the traffic offload configuration message, the UE acquires information about an RB on which traffic offload can be performed, where data that requires traffic offload and is a part of data corresponding to the RB on which traffic offload can be performed is called second data, wherein the second data is a part of data required to be transmitted between a network side and the UE, and the other part of the data required to be transmitted is called first data;
a receiving module, configured to receive a traffic offload configuration completion message sent by the UE, where the traffic offload configuration completion message includes information about a second radio access device associated with the UE;
an establishment module, configured to establish a user plane channel between the radio access device and the second radio access device according to the information about the second radio access device received by the receiving module;
a first transmission module, configured to transmit, over an air interface of a first radio access technology between the radio access device and the UE, the first data determined by the determining and sending module to the UE, where the first radio access technology is corresponding to the first radio access device; and
a second transmission module, configured to transmit, over an air interface of a second radio access technology between the second radio access device and the UE and through the user plane channel between the first radio access device and the second radio access device, the second data determined by the determining and sending module to the UE, where the second radio access technology is corresponding to the second radio access device,
wherein the radio access device further comprises a modification module, configured to send a message for modifying traffic offload configuration to the UE, wherein the message for modifying traffic offload configuration comprises information about an updated RB on which traffic offload can be performed; receive a message about completion of modifying traffic offload configuration sent by the UE, wherein the message about completion of modifying traffic offload configuration is sent by the UE after the UE completes configuration according to the information about the updated RB on which traffic offload can be performed; transmit updated second data to the UE over the air interface of the second radio access technology between the second radio access device and the UE and through the user plane channel between the first radio access device and the second radio access device, wherein the updated second data is data corresponding to the updated RB; and transmit updated first data to the UE over the air interface of the first radio access technology between the radio access device and the UE, wherein the updated first data is data except the updated second data in the data required to be transmitted between the network side and the UE.

According to another aspect, an embodiment of the present invention provides a user equipment, including:
a receiving module, configured to receive a traffic offload configuration message sent by a first radio access device;
an acquiring module, configured to acquire information about an RB on which traffic offload can be performed, where data that requires traffic offload and is a part of data corresponding to the RB on which traffic offload can be performed is called second data, wherein the second data is a part of data required to be transmitted between a network side and the UE, and the other part of the data required to be transmitted is called first data;
a sending module, configured to send a traffic offload configuration completion message corresponding to the traffic offload configuration message received by the receiving module to the first radio access device, where the traffic offload configuration completion message includes information about a second radio access device associated with the UE, so that the first radio access device establishes a user plane channel between the first radio access device and the second radio access device according to the information about the second radio access device;
a first transmission module, configured to transmit, over an air interface of a first radio access technology between the first radio access device and the UE, the first data determined by the acquiring module to the first radio access device, where the first radio access technology is corresponding to the first radio access device; and
a second transmission module, configured to transmit, over an air interface of a second radio access technology between the second radio access device and the UE and through the user plane channel, the second data determined by the acquiring module to the first radio access device, where the second radio access technology is corresponding to the second radio access device,
wherein the user equipment further comprises a modification module, configured to receive a message for modifying traffic offload configuration of the first radio access device, wherein the message for modifying traffic offload configuration comprises information about an updated RB on which traffic offload can be performed; send, after the configuration is updated according to the information about the updated RB on which traffic offload can be performed, a message about completion of modifying traffic offload configuration to the first radio access device; transmit updated second data to the first radio access device over the air interface of the second radio access technology between the second radio access device and the UE and through the user plane channel, wherein the updated second data is data corresponding to the updated RB; and transmit updated first data to the first radio access device over the air interface of the first radio access technology between the first radio access device and the UE, wherein the updated first data is data except the updated second data in the data required to be transmitted between the network side and the UE.

As can be seen from the foregoing technical solutions, in the embodiments of the present invention, air interface data is transmitted over an air interface of a first radio access technology and an air interface of a second radio access technology, so that transmission bandwidth on an air interface can be increased; and different radio access technologies are used, so that the problem that costs are relatively high because only the first radio access technology is used can be avoided and the problem that user experience is relatively poor because only the second radio access technology is used can be avoided.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a schematic structural diagram of an embodiment of a wireless network system according to the present invention;
FIG. 2 is a schematic structural diagram of an embodiment of a protocol stack on a wireless network system according to the present invention;
FIG. 3 is a schematic flowchart of an embodiment of a data transmission method according to the present invention;
FIG. 4 is a schematic flowchart of another embodiment of a data transmission method according to the present invention;
FIG. 5 is a schematic flowchart of another embodiment of a data transmission method according to the present invention;
FIG. 6 is a schematic structural diagram of another embodiment of a protocol stack on a wireless network system according to the present invention;
FIG. 7 is a schematic structural diagram of a MAC CE used to notify information about an RB used by data requiring traffic offload according to an embodiment of the present invention;
FIG. 8 is a schematic flowchart of another embodiment of a data transmission method according to the present invention;
FIG. 9 is a schematic flowchart of another embodiment of a data transmission method according to the present invention;
FIG. 10 is a schematic flowchart of another embodiment of a data transmission method according to the present invention;
FIG. 11 is a schematic structural diagram of an embodiment of a radio access device according to the present invention; and
FIG. 12 is a schematic structural diagram of an embodiment of a user equipment according to the present invention.

### DESCRIPTION OF EMBODIMENTS

To make the objectives, technical solutions, and advantages of the embodiments of the present invention more comprehensible, the following clearly and completely describes the technical solution in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

In the embodiments of the present invention, to increase bandwidth on an air interface, two radio access technologies are used to provide services for a UE. Radio access devices corresponding to the two radio access technologies are a first radio access device and a second radio access device respectively.

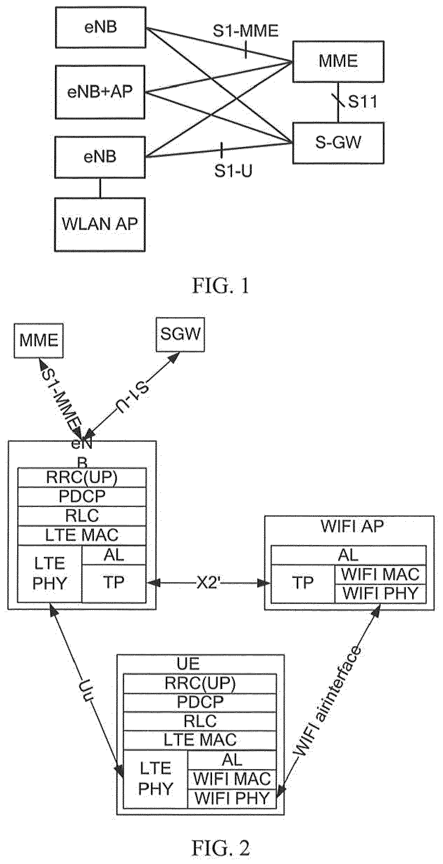

FIG. 1 is a schematic structural diagram of an embodiment of a wireless network system according to the present invention. An example in which a first radio access device is an eNB and a second radio access device is a WIFI AP is used in this embodiment. Correspondingly, a first radio access technology is LTE, and a second radio access technology is WIFI, It should be understood that the first radio access technology and the second radio access technology may further be extended to other radio access technologies.

Referring to FIG. 1, the system includes a mobility management entity (Mobility Management Entity, MME) and a serving gateway (Serving Gateway, S-GW) on a core network. In an existing protocol, on an access network, only an eNB is used. However, the embodiment of the present invention further includes another radio access device, that is, a WIFI AP.

The eNB is connected to the MME and the S-GW over a control plane interface S1-MME and a user plane interface S1-U, respectively, and the MME and the S-GW are connected to each other by using an S11 interface.

In practical deployment, the eNB and the WIFI AP may be located on a same node or located on different nodes. When the eNB. and the WIFI AP are located on different nodes, they are connected to each other over an X2' interface, where the X2' interface is named merely for brevity.

In addition, the embodiment of the present invention may also be applied to a scenario in which more than three radio access technologies coexist, where a radio access device of one radio access technology has a control function; for this radio access device, reference may be made to a processing procedure of the first radio access device in the embodiment of the present invention; and for radio access devices of the rest radio access technologies, reference may be made to a processing procedure of the second radio access device in the embodiment of the present invention.

FIG. 2 is a schematic structural diagram of an embodiment of a protocol stack on a wireless network system according to the present invention. An adaption layer (Adaption Layer, AL) is introduced in the embodiment of the present invention, where the AL may specifically be a protocol sublayer or a functional entity. The AL is located between LTE MAC layer and WIFI MAC layer, and the AL is capable of completing data transmission from LTE to WIFI. ALs in different devices may specifically perform different processes. For details, reference may be made to descriptions of different devices below.

A wireless network in this embodiment includes two radio access devices on an access network side, and the two radio access devices are capable of transmitting data to a UE over an air interface at the same time. This can increase transmission bandwidth on the air interface, increase a data transmission rate, and increase throughput of the UE. In addition, one of the radio access devices in this embodiment uses a WIFI AP, that is, not all of the radio access devices use eNBs. In this way, deployment and maintenance costs can be reduced.

Based on the foregoing network architecture, the present invention provides the following embodiments.

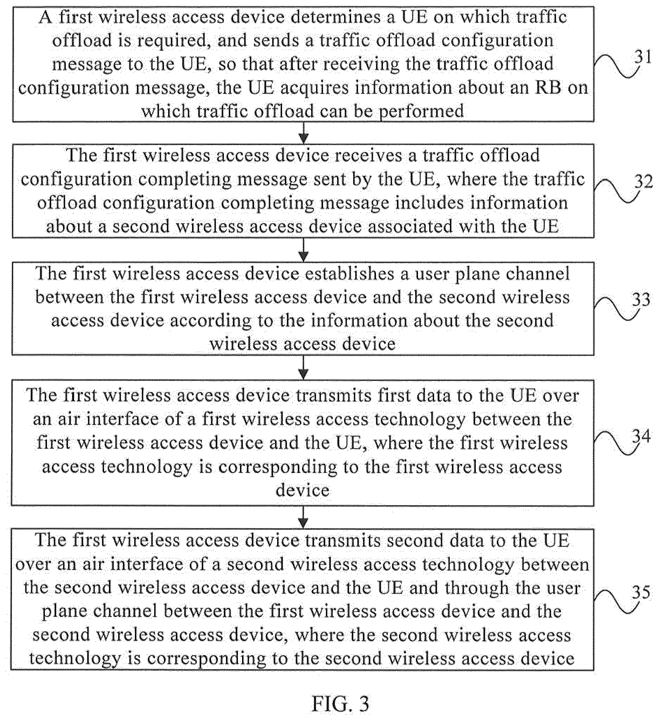

FIG. 3 is a schematic flowchart of an embodiment of a data transmission method according to the present invention. A process of a first radio access device is used as an example in this embodiment. Referring to FIG. 3, this embodiment includes:
Step 31: A first radio access device determines a UE on which traffic offload is required, and sends a traffic offload configuration message to the UE, so that after receiving the traffic offload configuration message, the UE acquires information about a radio bearer (Radio Bearer, RB) on which traffic offload can be performed, where data that requires traffic offload and is a part of data corresponding to the RB on which traffic offload can be performed is second data, the second data is a part of data required to be transmitted between a network side and the UE, and the other part of the data required to be transmitted is first data. Specifically, the first data includes data except the second data in the data corresponding to the RB on which traffic offload can be performed, and data corresponding to an RB on which traffic offload cannot be performed.

The first radio access device refers to a device controlling traffic offload in various radio access technologies. In the embodiment of the present invention, an eNB used as the first radio access device is used as an example. A second radio access device refers to a device transmitting traffic offload data in various radio access technologies. In the embodiment of the present invention, a WIFI AP used as the second radio access device is used as an example. Correspondingly, in the embodiment of the present invention, a first radio access technology refers to an LTE, technology, and a second radio access technology refers to a WIFI technology.

The first radio access device may determine, according to one or more of the following items: a requirement on quality of service (Quality of Service, QoS) of a service, subscription information, load of a current cell, availability of a traffic offload network, whether a UE supports data transmission on a traffic offload network, and the like, a UE on which traffic offload is required.

Further, the eNB may further determine, for the UE according to the foregoing information, an RB on which traffic offload may be performed, that is, an RB on which traffic offload can be performed.

For example, when a service performed by a certain UE is a service that does not require a high quality, such as a File Transfer Protocol (File Transfer Protocol, FTP) service and a point-to-point transmission service, and subscription information of the UE indicates that the UE is capable of accepting LTE and WIFI services, the UE may be determined as a UE on which traffic offload is required, and further an RB corresponding to the FTP service or the point-to-point transmission service may also be determined as an RB on which traffic offload can be performed.

Further, the eNB may determine a part or all of the data corresponding to the RB on which traffic offload can be performed as the part of data requiring traffic offload, that is, the second data. For example, a part or all of data in the foregoing FTP service is determined as the second data. Specifically, the eNB may determine the second data according to a resource scheduling condition. For example, when sufficient WIFI resources are available, all the data corresponding to the RB on which traffic offload can be performed may be determined as the second data; or, when WIFI resources are insufficient but LTE resources are sufficient, a small part of the data corresponding to the RB on which traffic offload can be performed may be determined as the second data, and even it is determined that no second data exists, that is, all data is transmitted over LTE. Certainly, the second data may also be determined according to another specific implementation manner.

The foregoing data requiring traffic offload, that is, the second data, refers to data transmitted over an air interface of a second radio access technology. When certain data requires to be transmitted, a service to which the data belongs may be determined first. If the service to which the data belongs is corresponding to the RB on which traffic offload can be performed, for example, the foregoing FTP service, when radio access technology resources corresponding to the traffic offload, such as the WIFI resources, are sufficient, the data may be transmitted over the WIFI. A size of the second data may be determined according to channel quality and/or quality of service of the WIFI. For example, after the channel quality and/or the quality of service of the WIFI deteriorates, the amount of the second data may be reduced. Further, a size of the second data transmitted each time may be determined according to WIFI performance. For example, the amount of data transmitted each time is a maximum size of data packets allowed to be transmitted over the WIFI.

In addition, that after receiving the traffic offload configuration message, the UE acquires information about an RB on which traffic offload can be performed may be understood as follows: After being configured with a traffic offload function (that is, after receiving the traffic offload configuration message), the UE needs to acquire the information about the RB on which traffic offload can be performed, so as to subsequently transmit data, but the "after" may not be understood as a definite time sequence, for example, that which RBs are RBs on which traffic offload can be performed (such as acquiring information about the RBs on which traffic offload can be performed) may also be preconfigured on the UE, and a traffic offload function is configured by the eNB. for the UE at later time (such as receiving the traffic offload configuration message).

Step 32: The first radio access device receives a traffic offload configuration completion message sent by the UE, where the traffic offload configuration completion message includes information about a second radio access device associated with the UE.

The UE may establish an association with the WIFI AP before the first radio access device sends the traffic offload configuration message, or may establish an association with the WIFI AP after the UE receives the traffic offload configuration message.

The UE may initiate an association with a corresponding WIFI AP according to signal strength of the WIFI AP. For example, the UE detects signal strength of a nearby WIFI AP, and then initiates an association with a WIFI AP with the maximum signal strength.

The information about the second radio access device may be, for example, an address of the second radio access device and/or a serial number of an association between the UE and the second radio access device.

Step 33: The first radio access device establishes a user plane channel between the first radio access device and the second radio access device according to the information about the second radio access device.

The user plane channel may specifically be a General Packet Radio System Tunneling protocol (GPRS (General Packet Radio System) Tunneling Protocol, GTP) channel; certainly, the channel may also be established based on another protocol. No further details are provided herein.

Step 34: The first radio access device transmits the first data to the UE over an air interface of a first radio access technology between the first radio access device and the UE, where the first radio access technology is corresponding to the first radio access device.

Step 35: The first radio access device transmits the second data to the UE over the air interface of the second radio access technology between the second radio access device and the UE and through the user plane channel between the first radio access device and the second radio access device, where the second radio access technology is corresponding to the second radio access device.

In this embodiment, air interface data is transmitted over an air interface of a first radio access technology and an air interface of a second radio access technology, so that transmission bandwidth on an air interface can be increased; and different radio access technologies are used, so that the problem that costs are relatively high because only the first radio access technology is used can be avoided and the problem that user experience is relatively poor because only the second radio access technology is used can be avoided.

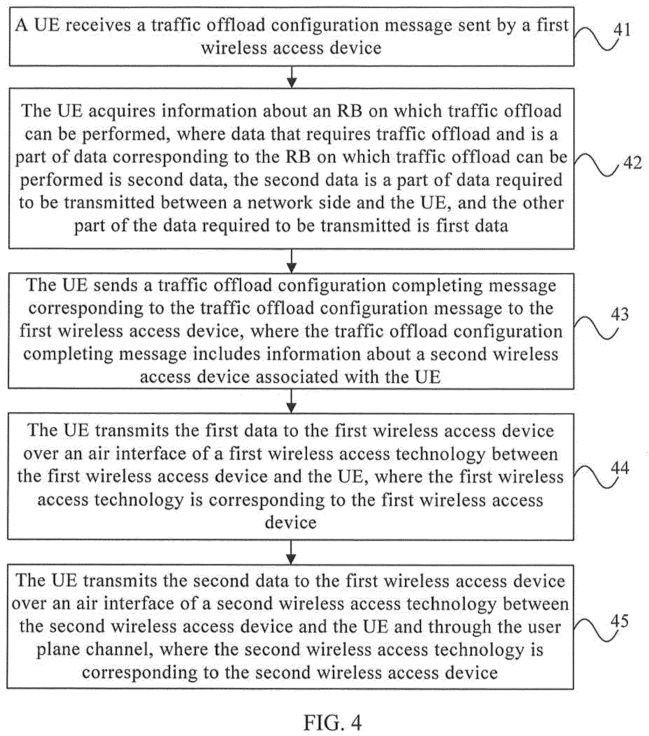

FIG. 4 is a schematic flowchart of another embodiment of a data transmission method according to the present invention. A process of a UE is used as an example in this embodiment. Referring to FIG. 4, this embodiment includes:
Step 41; A UE receives a traffic offload configuration message sent by a first radio access device.

The UE refers to a UE served by at least two radio access technologies at the same time. In the embodiment of the present invention, the UE may receive services on LTE and WIFI; that is, the UE may transmit data over an LTE air interface and transmit data over a WIFI air interface.

Step 42: The UE acquires information about an RB on which traffic offload can be performed, where data that requires traffic offload and is a part of data corresponding to the RB on which traffic offload can be performed is second data, the second data is a part of data required to be transmitted between a network side and the UE, and the other part of the data required to be transmitted is first data.

An eNB may carry, in the traffic offload configuration message, the information about the RB on which traffic offload can be performed, in which case the UE may acquire the information about the RB on which traffic offload can be performed from the traffic offload configuration message; or, the eNB may also carry, in a MAC: CE or physical layer signaling, the information about the RB on which traffic offload can be performed, in which case the UE may acquire the information about the RB on which traffic offload can be performed from the MAC CE or the physical layer signaling.

Further, after receiving the information about the RB on which traffic offload can be performed, where the information is carried in the MAC CE or the physical layer signaling, the UE may determine, before subsequently receiving again the MAC CE or the physical layer signaling that carries the information about the RB on which traffic offload can be performed, all the data corresponding to the information about the RB on which traffic offload can be performed as the second data.

Optionally, similar to the eNB, the UE may also determine, according to an actual resources condition, a part of data in the data corresponding to the RB on which traffic offload can be performed as the second data.

Step 43: The UE sends a traffic offload configuration completion message corresponding to the traffic offload configuration message to the first radio access device, where the traffic offload configuration completion message includes information about a second radio access device associated with the UE, so that the first radio access device establishes a user plane channel between the first radio access device and the second radio access device according to the information about the second radio access device.

The information about the second radio access device may be, for example, an address of the second radio access device and/or a serial number of an association between the UE and the second radio access device.

Step 44: The UE transmits the first data to the first radio access device over an air interface of a first radio access technology between the first radio access device and the UE, where the first radio access technology is corresponding to the first radio access device.

Step 45: The UE transmits the second data to the first radio access device over an air interface of a second radio access technology between the second radio access device and the UE and through the user plane channel, where the second radio access technology is corresponding to the second radio access device.

In this embodiment, air interface data is transmitted over an air interface of a first radio access technology and an air interface of a second radio access technology, so that transmission bandwidth on an air interface can be increased; and different radio access technologies are used, so that the problem that costs are relatively high because only the first radio access technology is used can be avoided and the problem that user experience is relatively poor because only the second radio access technology is used can be avoided.

The foregoing describes the data transmission method in the present invention from each single side, and the following describes different traffic offload processes in combination with various devices. The traffic offload processes may include configuration establishment, configuration modification, configuration release, and configuration handover.

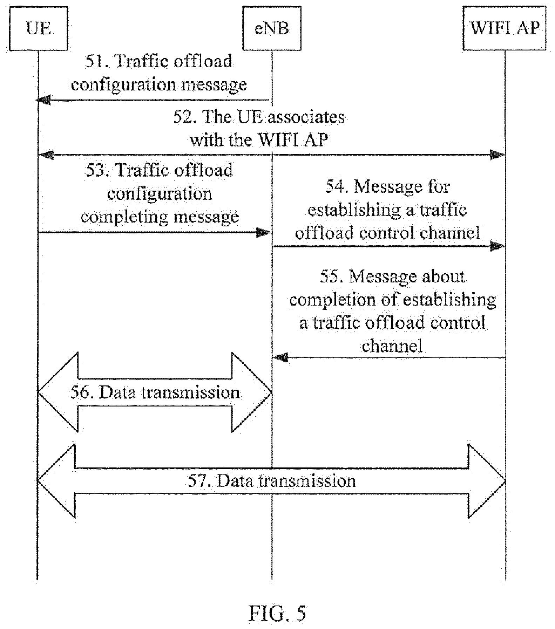

FIG. 5 is a schematic flowchart of another embodiment of a data transmission method according to the present invention. A configuration establishment process is used as an example in this embodiment. Referring to FIG. 5, this embodiment includes:
Step 51: An eNB determines a UE on which traffic offload is required and information about an RB on which traffic offload can be performed, and sends a traffic offload configuration message to the UE.

For details, reference may be made to step 31.

An example in which the eNB determines the information about the RB on which traffic offload can be performed is used in this embodiment. Certainly, another manner may also be used to determine, for the UE, the RB on which traffic offload can be performed. One or more RBs on which traffic offload can be performed may exist.

The traffic offload configuration message may be sent to the UE by using a radio resource control (Radio Resource Control, RRC) message. The RRC message used to send the traffic offload configuration message may be an existing RRC message, an RRC message formed by adding a new information element (Information Element, IE) to the existing RRC message, or a new RRC message.

Step 52: After receiving the traffic offload configuration message, the UE performs an association with a WIFI AP.

For example, the UE may initiate an association with a WIFI AP with the highest signal strength.

A connection may be established between the UE and a corresponding WIFI AP through the association and then used by the UE and the WIFI AP to transmit data over a WIFI air interface.

In addition, after the association is established, the UE may acquire information about the WIFI AP associated with the UE, where the information about the WIFI AP may include an address of the WIFI AP and/or association information of the UE and the WIFI AP, and the association information is, for example, a serial number of the association. Correspondingly, the WIFI AP may also acquire association information of the UE associated with the WIFI AP. For example, a serial number of an association corresponding to UE1 is ID1, a serial number of an association corresponding to UE2 is ID2, and each serial number of an association is corresponding to a connection between the WIFI AP and the UE, so as to transmit air interface data between the WIFI AP and the UE.

Optionally, step 52 may be performed before step 51.

Optionally, before the UE establishes the association with the WIFI AP, the UE may exchange WIFI-related information with the eNB, where the WIFI-related information may include at least one of the following items: capability information of the UE for supporting WIFI, capability information of the eNB. for supporting the WIFI, and information about an available WIFI AP. The eNB may determine, by using the WIFI-related information, whether traffic is offloaded to the WIFI, which WIFI AP or WIFI APs the traffic is offloaded to, which UE or UEs traffic offload is performed on, or the like.

Step 53: The UE sends a traffic offload configuration completion message to the eNB, where the traffic offload configuration completion message carries the information about the WIFI AP associated with the UE.

Optionally, after acquiring the information about the WIFI AP associated with the UE, the UE may report the information about the WIFI AP to the eNB by using an independent message. In this case, the traffic offload configuration completion message in step 53 may not carry the information about the WIFI AP.

Step 54: The eNB sends, to the WIFI AP associated with the UE, a message for establishing a traffic offload control channel.

Step 55: The WIFI AP sends a message about completion of establishing a traffic offload control channel to the eNB.

In step 54 and step 55, a user plane channel between the eNB and the WIFI AP may be established, where the user plane channel is, for example, a GTP channel.

The eNB may determine, by using the information about the WIFI AP reported by the UE, the WIFI AP associated with the UE, and then initiate establishment of the user plane channel between the eNB. and the WIFI AP.

A message between the eNB and the WIFI AP may be transmitted over an X2' interface. When the eNB. and the WIFI AP are located on a same node, a function of the X2' interface may be performed by the eNB.

The message for establishing a traffic offload control channel may include channel number information allocated by the eNB to a certain UE, identifier information of the UE or association information of the UE, identifier information of an associated WIFI AP, and the like, where the channel number information may specifically be a GTP channel number, the identifier information of the UE may specifically be a cell radio network temporary identifier (Cell Radio Network Temporary Identifier, C-RNTI) of the UE, and the association information may specifically be a serial number of an association.

After receiving the message for establishing a traffic offload control channel, the WIFI AP binds the previously established association with the UE. For example, the WIFI AP determines a corresponding serial number of an association according to the identifier information of the UE that is included in the message for establishing a traffic offload control channel, and may further transmit data to the UE over the WIFI air interface through a connection corresponding to the serial number of the association.

Then, the WIFI AP sends the message about completion of establishing a traffic offload control channel to the eNB, where the message about completion of establishing a traffic offload control channel includes at least channel number information allocated by the WIFI AP to the UE for the traffic offload, such as a GTP channel number. In addition, the channel number information allocated by the eNB to the certain UE may be the same as or different from the channel number information allocated by the WIFI AP to the UE for the traffic offload.

Optionally, there is no time sequence constraint relationship between steps 54-55 and steps 51-53. If steps 53-54 are performed before step 51, the eNB needs to send the identifier information of the UE to the WIFI AP, for example, the eNB may carry the identifier information of the UE in the message for establishing a traffic offload control channel; after the UE establishes the association with the WIFI AP, the WIFI AP may acquire information about the associated UE, for example, the UE may send the identifier information of the UE to the WIFI AP over WIFI, so that the WIFI AP acquires the identifier information of the UE associated with the WIFI AP, and corresponding association information, such as correspondence between the identifier information of the UE and the serial number of the association; and then, after acquiring the identifier information of the UE from the message for establishing a traffic offload control channel, the WIFI AP may determine a corresponding association connection according to the acquired correspondence between the identifier information of the UE and the serial number of the association, so as to transmit data to a corresponding UE through the corresponding association connection.

Step 56: The UE and the eNB transmit data over an LTE air interface.

For example, during downlink data transmission, the eNB directly sends a part of data to the UE over the LTE air interface. The data includes data over an RB that is not configured as an RB requiring or supporting traffic offload to a WIFI network, and/or a part or all of data over an RB that is configured as an RB requiring or supporting traffic offload to a WIFI network.

Step 57: The UE and the WIFI AP transmit data over the WIFI air interface.

For example, during the downlink data transmission, the eNB sends the UE the other part of data (that is, a part or all of data over an RB that is configured as an RB requiring or supporting traffic offload) through the user plane channel established between the eNB and the WIFI AP and over an air interface between the WIFI AP and the UE between which the association has been established.

So far, the UE may acquire data from the LTE air interface and the WIFI air interface. Then, the UE may take the two parts of data as data required to be delivered by a network side to the UE for subsequent processing.

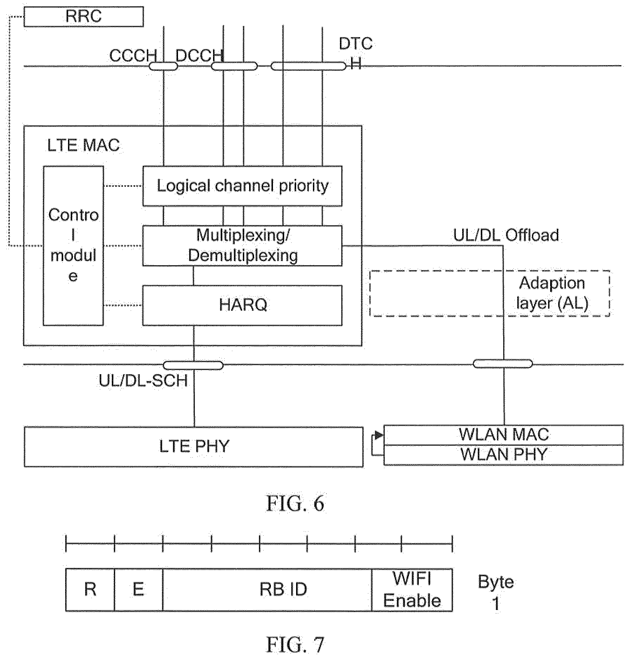

Specifically, during data transmission, as shown in FIG. 2, an AL is added in the embodiment of the present invention. FIG. 2 shows relationships between protocol layers of various devices on the system. Specifically, for a UE, a protocol stack on the UE may be as shown in FIG. 6. FIG. 6 is a schematic structural diagram of another embodiment of a protocol stack on a wireless network system according to the present invention. Referring to FIG. 6, the protocol stack may be a protocol stack corresponding to the UE. Certainly, for brevity, only an RRC, LTE MAC layer, LTE, PHY layer, an AL, WIFI MAC layer, and WIFI PHY layer are shown in FIG. 6.

For the UE, during uplink data transmission, a multiplexing/demultiplexing module receives an instruction from the AL; and performs, according to encapsulation and multiplexing information notified by the AL (the information includes at least a size of a MAC PDU encapsulated at the LTE, MAC layer, the number of MAC PDUs encapsulated at the LTE MAC layer, and the like that are notified), encapsulation and multiplexing for to-be-transmitted data over an RB that is configured as an RB requiring or supporting traffic offload, where the encapsulation and multiplexing information notified by the AL meets a requirement of data transmission over WIFI. Then, the multiplexing/demultiplexing module sends the data after the encapsulation and multiplexing to the WIFI MAC layer through the AL, and sends the data after the encapsulation and multiplexing to a WIFI AP through the WIFI PHY layer over a WIFI air interface. Then, the WIFI AP sends the data after the encapsulation and multiplexing to the eNB through a user plane channel between the WIFI AP and an eNB. Certainly, to-be-transmitted data over an RB that is not configured as an RB requiring or supporting traffic offload, and/or a part or all of the to-be-transmitted data over the RB that is configured as an RB requiring or supporting traffic offload may be processed according to an existing LTE protocol. For example, encapsulation and multiplexing are performed according to encapsulation and multiplexing information notified by the LTE PHY layer (the information includes at least a size of a MAC PDU encapsulated at the LTE, MAC layer, the number of MAC PDUs encapsulated at the LTE MAC layer, and the like that are notified), and then the data after the encapsulation and multiplexing is sent to the eNB through the LTE PHY layer over an LTE air interface.

During downlink data transmission, for data received over the WIFI air interface, the AL may submit data of the WIFI MAC layer to the multiplexing/demultiplexing module, and the multiplexing/demultiplexing module performs decapsulation and demultiplexing for the data that is reported by the AL and transmitted over the WIFI, so as to obtain data from the WIFI air interface. The data from the WIFI air interface is received by the WIFI AP from the eNB. through the user plane channel between the WIFI AP and the eNB. Certainly, the UE may process data over the LTE air interface according to the existing LTE protocol.

After receiving the data from the LTE air interface and the WIFI air interface, the UE may combine the two parts of data to perform subsequent processing. For example, when a hybrid automatic repeat request (Hybrid Automatic Repeat Request, HARQ) is used, both the data over the LTE air interface and the data over the WIFI air interface, instead of only the data from the LTE air interface, are combined to determine whether data is successfully received; if the sum of the two parts of data meets a condition for successful reception, an HARQ module may feed back ACK information

In addition, a logical channel priority module may be mainly used to prioritize different logical channels (that is, different RBs), so that the priorities can be used as references when encapsulation and multiplexing are performed at the MAC for data of different RBs.

In the foregoing, the multiplexing/demultiplexing module at the LTE MAC layer completes encapsulation and multiplexing or decapsulation and demultiplexing for data transmitted over the WIFI. Optionally, the encapsulation and multiplexing or the decapsulation and demultiplexing may be completed at the AL; in this case, downlink data may be sent from the LTE MAC layer to the AL. Data at the LTE MAC layer may be actively requested by the AL, as described in the foregoing, or actively delivered from the LTE, MAC layer. Further, the data at the LTE, MAC layer may be actively requested or actively delivered periodically.

The foregoing describes the processing on a UE side, and corresponding processes at ALs of the eNB and the WIFI AP may also be completed.

In downlink, the eNB needs to complete adapting data transmitted over LTE to data transmitted over the WIFI. For example, reference may be made to the processing of the data requiring traffic offload by the UE in uplink. Then, the adapted data transmitted over the WIFI is sent to the WIFI AP through a transport protocol layer. In the uplink, after the eNB receives the data from the WIFI AP, decapsulation and demultiplexing are performed for the received data at the LTE MAC layer.

In the uplink, the WIFI AP needs to adapt the data transmitted over the WIFI to the data transmitted over the LTE. For example, the AL of the WIFI AP restores data from the WIFI MAC layer to the LTE MAC data and is sent to the eNB through the TP layer (a TP header may be added to the restored LTE MAC data). In the downlink, after receiving data sent by the eNB, the WIFI AP AL sends the data received from the eNB. to the UE through the WIFI MAC layer and the WIFI PHY layer. In this process, the WIFI AP AL may need to convert the data received from the eNB into a format suitable for WIFI transmission and then transmits the data to the UE over the WIFI air interface, or directly deletes a TP header from the data received from the eNB and then transmits the data to the UE over the WIFI air interface.

The data requiring traffic offload in the foregoing process may be determined according to WIFI information. For example, a size of a data packet transmitted each time by the AL over the WIFI air interface may be selected as a size of a maximum data packet that is allowed to be transmitted over the WIFI. The AL may further determine, based on one or more of channel quality and quality of service of the WIFI, the amount of data transmitted over the WIFI air interface. For example, when the quality of service of the WIFI deteriorates, the amount of data requiring traffic offload is reduced.

Further, in data transmission process, the eNB may dynamically change information about an RB on which traffic offload is required; for example, a change is controlled by using a Media Access Control control element (Media Access Control Control Element, MAC CE) or physical layer signaling. For example, the foregoing traffic offload configuration message carries the information about the RB on which traffic offload can be performed, and then the eNB may make the change by using the MAC CE or the physical layer signaling. Alternatively, the traffic offload configuration message does not carry the information about the RB on which traffic offload can be performed, and the information is directly notified and controlled by the MAC CE or the physical layer signaling.

The MAC CE may be included in a Media Access Control protocol data unit (Media Access Control Protocol Data Unit, MAC PDU), where the MAC PDU is a transmission unit of data at a physical layer, and the data is sent by the eNB to the UE.

A MAC CE is used as an example. The MAC CE may be sent by the eNB to the UE over the LTE air interface, or sent by the eNB. to the UE through the user plane channel between the eNB and the WIFI AP and over the WIFI air interface between the WIFI AP and the UE.

A format of the MAC CE may be as shown in FIG. 7. FIG. 7 is a schematic structural diagram of a MAC CE used to notify information about an RB used by data requiring traffic offload according to an embodiment of the present invention. Referring to FIG. 7, the meaning of each field may be as follows:
R: reserved bit;
E: represents whether an RB ID and a WIFI Enable domain follow; for example, "1" represents that the RB ID and the WIFI Enable domain exist, and "0" represents that the RB ID and the WIFI Enable domain do not exist;
RB ID: an identifier of an RB used by data transmitted between a network side and a UE; and
WIFI Enable: represents whether data of a corresponding RB is required to be transmitted over WIFI, for example, "1" represents that the data is transmitted over the WIFI, and "0" represents that the data is not transmitted over the WIFI.

Further, a corresponding LCID in a MAC PDU header of a MAC PDU in which the MAC CE is located may be set to indicate that the MAC CE is used for WIFI traffic offload configuration.

Specifically, when wanting data of a certain RB, certain RBs, or all RBs to be transmitted over the WIFI, the eNB sends configuration information to the UE by using the MAC CE or the physical layer signaling, and after receiving the MAC CE or the physical layer signaling, the UE configures the AL and/or the LTE MAC layer. After the configuration is completed, encapsulation and multiplexing based on LTE transmission are not performed at the LTE MAC layer any more for the data of a certain RB, certain RBs, or all RBs, and certainly, the data does not need to be transmitted through an LTE physical layer. The AL instructs the LTE MAC layer to perform encapsulation and multiplexing based on WIFI transmission for the data of a certain RB, certain RBs, or all RBs, and the AL notifies the LTE MAC layer of a size and the number of encapsulated data. In addition to the processing of the data of a certain RB, certain RBs, or all RBs, the MAC CE may also be transmitted over the WIFI or transmitted only over the LTE.

When wanting data of a certain RB, certain RBs, or all RBs to be restored to transmission over the LTE, the eNB configures the AL and/or the LTE MAC layer by using the MAC CE or the physical layer signaling again. After the configuration is completed, the data of a certain RB, certain RBs, or all RBs does not participate in a data encapsulation process requested by the AL any more. Optionally, when it is configured that the data of all RBs cannot be transmitted over the WIFI, the AL may not request data from the LTE MAC layer any more, or the LTE MAC layer does not actively send data to the AL any more. The MAC CE may include at least the RB ID, and information about whether data corresponding to an RB is transmitted over the WIFI. If multiple RBs are configured, multiple MAC CEs may be used, or configuration information of multiple RBs is included in a same MAC CE; and if all RBs are configured, only information about whether data can be transmitted over the WIFI may be included. The physical layer signaling is processed similarly.

Optionally, the data corresponding to the RB on which traffic offload can be performed may also be transmitted over the LTE or the WIFI according to scheduling. For example, an RB, corresponding to service 1 is configured as an RB on which traffic is required to be offloaded to the WIFI. However, in a certain period of time, when resources of the WIFI are relatively few or quality of service of the WIFI is relatively poor, and relatively many resources are scheduled for the LTE, a part or all of data belonging to service 1 may be transmitted over the LTE in an LTE transmission manner, but is not be transmitted only over the WIFI any more. In this embodiment, in the configuration establishment process, data can be transmitted over an LTE air interface and a WIFI air interface, so as to increase bandwidth on an air interface, increase a data transmission rate, and increase throughput of a UE.

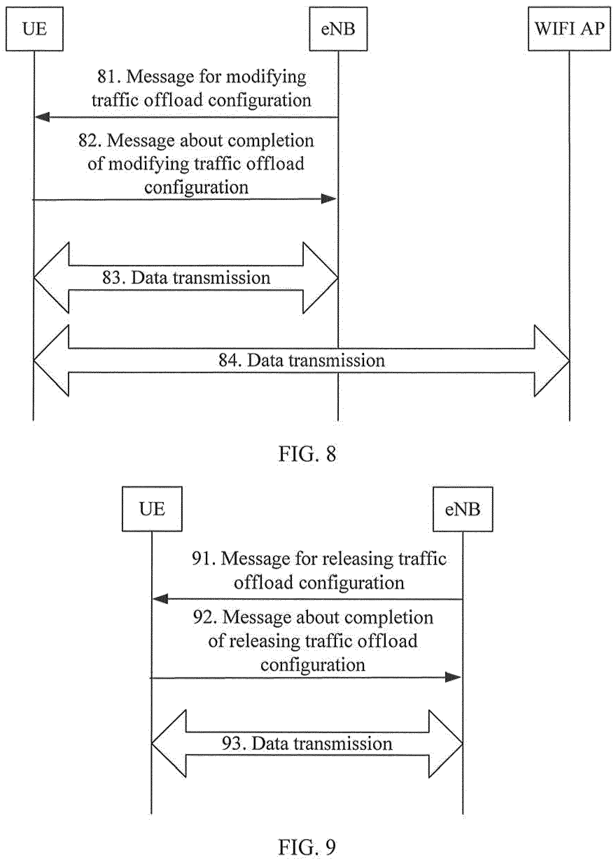

FIG. 8 is a schematic flowchart of another embodiment of a data transmission method according to the present invention. A configuration modification process is used as an example in this embodiment. Referring to FIG. 8, this embodiment includes:
Step 81: An eNB sends a message for modifying traffic offload configuration to a UE.

The message for modifying traffic offload configuration may carry information about a modified RB that requires or supports traffic offload, that is, information about an RB on which traffic offload can be performed.

Step 82: The UE sends a message about completion of modifying traffic offload configuration to the eNB.

After receiving the message for modifying traffic offload configuration, the UE may update configuration, such as delete information about an RB that does not require or does not support traffic offload, or add information about a new RB that requires or supports traffic offload.

Step 83: The UE and the eNB transmit data over an LTE air interface. Because the RB on which traffic offload can be performed has been modified, the data transmitted over the LTE, air interface at this time also needs to be updated. For example, if the RB on which traffic offload can be performed does not include an RB corresponding to service 1 before the modification, and the RB on which traffic offload can be performed includes the RB corresponding to service 1 after the modification, the data transmitted over the LTE, air interface includes data of service 1 before the modification; however, after the modification, when system scheduling is not considered, the data transmitted over the LTE, air interface does not include the data of the service 1 any more.

Step 84: The UE and a WIFI AP transmit data over a WIFI air interface.

Similarly, the data transmitted over the WIFI air interface should also be data corresponding to the RB after the modification.

That is, for the foregoing data transmission method, reference may be made to the embodiment shown in FIG. 5. A difference from the embodiment shown in FIG. 5 is that an RB corresponding to data requiring traffic offload refers to the RB after the modification.

In addition, in this embodiment, as long as it is configured that at least one RB is transmitted through a WIFI AP before the modification, a user plane channel between the eNB and the WIFI AP does not need to be modified, that is, signaling exchange is not required so as to avoid complexity resulted from the signaling exchange.

In this embodiment, modifying traffic offload configuration can be implemented, and the complexity of the signaling exchange can be reduced.

FIG. 9 is a schematic flowchart of another embodiment of a data transmission method according to the present invention. A configuration release process is used as an example in this embodiment. Referring to FIG. 9, this embodiment includes:
Step 91: An eNB sends, to a UE, a message for releasing traffic offload configuration.
Step 92: The UE sends, to the eNB, a message about completion of releasing traffic offload configuration.

After receiving the message for releasing traffic offload configuration, the UE does not send uplink data to WIFI, nor receive downlink data from the WIFI.

Step 93: The UE and the eNB transmit data over an LTE air interface. Because the UE does not communicate with a WIFI AP, data required to be transmitted between a network side and the UE is transmitted over the LTE air interface.

In the foregoing process, after traffic offload configuration is released, the UE transmits data to the eNB. over the LTE air interface only, and does not transmit data to the WIFI AP over a WIFI air interface any more.

In addition, in a process of releasing the traffic offload configuration, a user plane channel between the eNB and the WIFI AP and/or an association between the UE and the WIFI AP may be released or not released. If the user plane channel between the eNB. and the WIFI AP and/or the association between the UE and the WIFI AP is released,
optionally, this embodiment may further include:
sending, by the eNB to the WIFI AP, a message for releasing a traffic offload control channel; and
sending, by the WIFI AP to the eNB, a message for completing releasing a traffic offload control channel.

Release of the user plane channel between the eNB and the WIFI AP can be implemented through the foregoing two steps.

Further, the following may further be included:
canceling the association between the UE and the WIFI AP.

In this embodiment, release of traffic offload configuration can be implemented, and a UE is served by only LTE rather than by both the LTE and WIFI, thereby simplifying data transmission when an LTE air interface meets a bandwidth requirement.

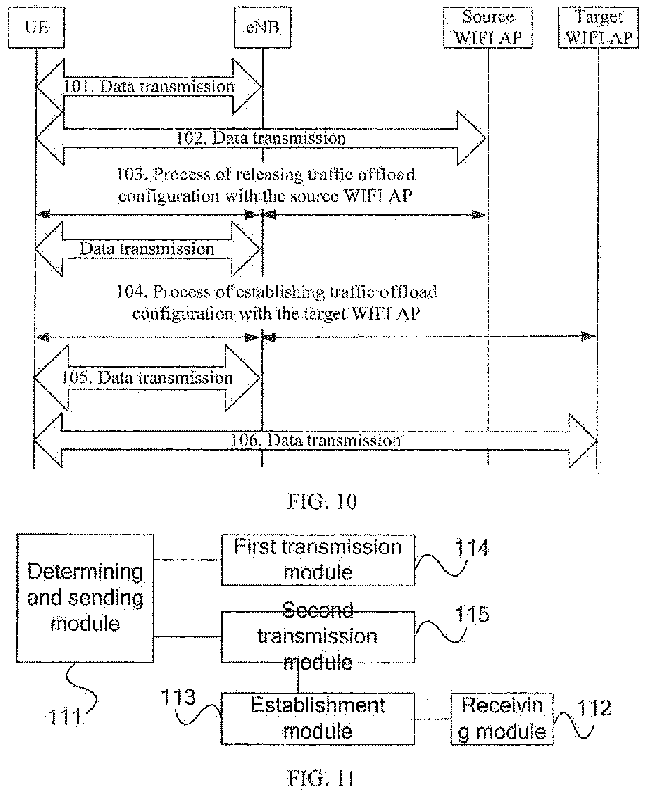

FIG. 10 is a schematic flowchart of another embodiment of a data transmission method according to the present invention. A configuration handover process is used as an example in this embodiment. A configuration handover in this embodiment refers to a handover of a WIFI AP, in which case a system includes a source WIFI AP before the handover and a target WIFI AP after the handover. Referring to FIG. 10, this embodiment includes:
Step 101: A UE and an eNB transmit data over an LTE air interface.
Step 102: The UE and the source WIFI AP transmit data over a WIFI air interface.
Step 103: After determining the handover of the WIFI AP, the eNB performs a release process between the UE and the source WIFI AP.

The eNB may determine, based on a measurement report of the UE and/or quality of service of data obtained through the source WIFI AP, and even deployment, load, and other information of a WIFI AP related to the eNB, that the handover of the WIFI AP is required and determines the target WIFI AP. For example, a WIFI AP with the highest signal strength from a WIFI AP that can be acquired is used as the target WIFI AP. For a process of releasing traffic offload configuration between the UE and the source WIFI AP, reference may be made to the embodiment shown in FIG. 9.

Step 104: The UE and the target WIFI AP perform a process of establishing traffic offload configuration.

For a process of establishing traffic offload configuration between the UE and the target WIFI AP, reference may be made to the embodiment shown in FIG. 5.

After the UE and the target WIFI AP establish the traffic offload configuration, the following may be implemented:
Step 105: The UE and the eNB transmit data over the LTE air interface.
Step 106: The UE and the target WIFI AP transmit data over the WIFI air interface.

In this embodiment, a traffic offload configuration handover is completed in combination with traffic offload configuration release and traffic offload configuration establishment and may also be implemented through a traffic offload configuration modification process.

That is, optionally, information about the target WIFI AP is carried in a message for modifying traffic offload configuration, and further information about the source WIFI AP may be carried. After receiving the message for modifying traffic offload configuration, the UE releases an association with the source WIFI AP and establishes an association with the target WIFI AP, and sends a message about completion of modifying traffic offload configuration to the eNB to notify the eNB that the association with the target WIFI AP has been successfully established; and once a user plane channel between the eNB and the target WIFI AP is established, the UE is capable of performing data traffic offload through the target WIFI AP.

In this embodiment, a traffic offload handover can be implemented so that different WIFI APs serve a UE.

FIG. 11 is a schematic structural diagram of an embodiment of a radio access device according to the present invention. The device is the foregoing first radio access device and is specifically, for example, an eNB. The device includes a determining and sending module 111, a receiving module 112, an establishment module 113, a first transmission module 114, and a second transmission module 115. The determining and sending module 111 is configured to determine a UE on which traffic offload is required and send a traffic offload configuration message to the UE, so that after receiving the traffic offload configuration message, the UE acquires information about an RB on which traffic offload can be performed, where data that requires traffic offload and is a part of data corresponding to the RB on which traffic offload can be performed is second data, the second data is a part of data required to be transmitted between a network side and the UE, and the other part of the data required to be transmitted is first data. The receiving module 112 is configured to receive a traffic offload configuration completion message sent by the UE, where the traffic offload configuration completion message includes information about a second radio access device associated with the UE. The establishment module 113 is configured to establish a user plane channel between the radio access device and the second radio access device according to the information about the second radio access device received by the receiving module. The first transmission module 114 is configured to transmit, over an air interface of a first radio access technology between the first radio access device and the UE, the first data determined by the determining and sending module to the UE, where the first radio access technology is corresponding to the first radio access device. The second transmission module 115 is configured to transmit, over an air interface of a second radio access technology between the second radio access device and the UE and through the user plane channel between the first radio access device and the second radio access device, the second data determined by the determining and sending module to the UE, where the second radio access technology is corresponding to the second radio access device.

Optionally, the second transmission module is specifically configured to: during downlink data transmission, perform encapsulation and multiplexing processing for the second data according to encapsulation and multiplexing information of the second radio access technology, and send the data after the encapsulation and multiplexing processing to the second radio access device through the user plane channel, so that the second radio access device sends the data to the UE over the air interface of the second radio access technology; and, during uplink data transmission, receive the second data sent by the second radio access device through the user plane channel, and perform decapsulation and demultiplexing processing for the second data according to the encapsulation and multiplexing information of the second radio access technology, where the second data is received by the second radio access device from the UE over the air interface of the second radio access technology.

Optionally, the second transmission module is further configured to:
perform, at a MAC layer of the first radio access technology, the encapsulation and multiplexing processing for the second data according to the encapsulation and multiplexing information of the second radio access technology notified by an AL, and perform, at the MAC layer according to the encapsulation and multiplexing information of the second radio access technology notified by the AL, the decapsulation and demultiplexing processing for the second data that passes through an AL of the first radio access device and a TP layer between the first radio access device and the second radio access device; or, receive, at an AL, the second data sent by MAC layer of the first radio access technology, perform the encapsulation and multiplexing processing for the second data according to the encapsulation and multiplexing information of the second radio access technology, receive, at the AL, the second data transmitted through a TP layer between the first radio access device and the second radio access device, and send the second data to a MAC layer of the first radio access technology after performing the decapsulation and demultiplexing processing for the second data according to the encapsulation and multiplexing information of the second radio access technology.

Optionally, the determining and sending module is further configured to: determine, for the UE, information about an RB on which traffic offload can be performed; the determining and sending module is further configured to include, in the traffic offload configuration message, the information about the RB on which traffic offload can be performed; or, the determining and sending module is further configured to send a MAC CE or physical layer signaling to the UE, where the MAC CE or the physical layer signaling includes the information about the RB on which traffic offload can be performed.

Optionally, the device may further include:
a modification module, configured to send a message for modifying traffic offload configuration to the UE, where the message for modifying traffic offload configuration includes information about an updated RB on which traffic offload can be performed; receive a message about completion of modifying traffic offload configuration sent by the UE, where the message about completion of modifying traffic offload configuration is sent by the UE after the UE completes configuration according to the information about the updated RB on which traffic offload can be performed; transmit updated second data to the UE over the air interface of the second radio access technology between the second radio access device and the UE and through the user plane channel between the radio access device and the second radio access device, where the updated second data is data corresponding to the updated RB; and transmit updated first data to the UE over the air interface of the first radio access technology between the radio access device and the UE, where the updated first data is data except the updated second data in the data required to be transmitted between the network side and the UE; or,
a release module, configured to send, to the UE, a message for releasing traffic offload configuration; receive a message about completion of releasing traffic offload configuration sent by the UE, where the message about completion of releasing traffic offload configuration is sent by the UE after the UE determines not to transmit data to the second radio access device any more; and transmit, over the air interface of the first radio access technology between the radio access device and the UE, the data required to be transmitted between the network side and the UE to the UE; or,
a handover module, configured to send, to the UE in a process that the UE hands over from a source second radio access device to a target second radio access device, a message for releasing traffic offload configuration; and receive a message about completion of releasing traffic offload configuration sent by the UE, where the message about completion of releasing traffic offload configuration is sent by the UE after the UE determines not to transmit data to the source second radio access device any more; or, send a message for modifying traffic offload configuration to the UE, where the message for modifying traffic offload configuration includes information about a source second radio access device and information about a target second radio access device; and receive a message about completion of modifying traffic offload configuration sent by the UE, where the message about completion of modifying traffic offload configuration is sent by the UE after the UE releases an association with the source second radio access device and establishes an association with the target second radio access device.

In this embodiment, air interface data is transmitted over an air interface of a first radio access technology and an air interface of a second radio access technology, so that transmission bandwidth on an air interface can be increased; and different radio access technologies are used, so that the problem that costs are relatively high because only the first radio access technology is used can be avoided and the problem that user experience is relatively poor because only the second radio access technology is used can be avoided.

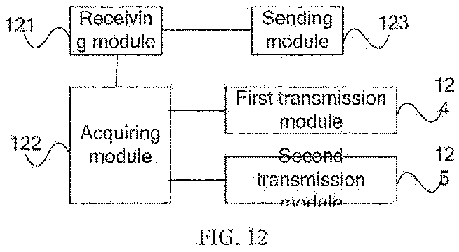

FIG. 12 is a schematic structural diagram of an embodiment of a user equipment according to the present invention. The user equipment includes a receiving module 121, an acquiring module 122, a sending module 123, a first transmission module 124, and a second transmission module 125. The receiving module 121 is configured to receive a traffic offload configuration message sent by a first radio access device. The acquiring module 122 is configured to acquire information about an RB on which traffic offload can be performed, where data that requires traffic offload and is a part of data corresponding to the RB on which traffic offload can be performed is second data, the second data is a part of data required to be transmitted between a network side and the UE, and the other part of the data required to be transmitted is first data. The sending module 123 is configured to send a traffic offload configuration completion message corresponding to the traffic offload configuration message received by the receiving module to the first radio access device, where the traffic offload configuration completion message includes information about a second radio access device associated with the UE, so that the first radio access device establishes a user plane channel between the first radio access device and the second radio access device according to the information about the second radio access device. The first transmission module 124 is configured to transmit, over an air interface of a first radio access technology between the first radio access device and the UE, the first data determined by the acquiring module to the first radio access device, where the first radio access technology is corresponding to the first radio access device. The second transmission module 125 is configured to transmit, over an air interface of a second radio access technology between the second radio access device and the UE and through the user plane channel, the second data determined by the acquiring module to the first radio access device, where the second radio access technology is corresponding to the second radio access device.

Optionally, the second transmission module is specifically configured to:
during uplink data transmission, perform, at a MAC layer of the first radio access technology, encapsulation and multiplexing processing for the second data according to encapsulation and multiplexing information of the second radio access technology notified by an AL, or receive, at an AL, the second data sent by MAC layer of the first radio access technology and perform encapsulation and multiplexing processing for the second data according to encapsulation and multiplexing information of the second radio access technology, and send the data after the encapsulation and multiplexing processing to the second radio access device over the air interface of the second radio access technology, so that the second radio access device sends the data to the first radio access device through the user plane channel; or, during downlink data transmission, receive the second data sent by the second radio access device over the air interface of the second radio access technology, and perform, at a MAC layer or an AL of the first radio access technology, decapsulation and demultiplexing processing for the second data according to the encapsulation and multiplexing information of the second radio access technology, where the second data is received by the second radio access device from the first radio access device through the user plane channel.

Optionally, the acquiring module is specifically configured to:
acquire, from the traffic offload configuration message, the information about the RB on which traffic offload can be performed; or, receive a MAC CE or physical layer signaling sent by the first radio access device, where the MAC CE or the physical layer signaling includes the information about the RB on which traffic offload can be performed, and acquire, from the MAC CE or the physical layer signaling, the information about the RB on which traffic offload can be performed.

Optionally, the user equipment further includes:
a modification module, configured to receive a message for modifying traffic offload configuration that is sent by the first radio access device, where the message for modifying traffic offload configuration includes information about an updated RB on which traffic offload can be performed; send, after the configuration is updated according to the information about the updated RB on which traffic offload can be performed, a message about completion of modifying traffic offload configuration to the first radio access device; transmit updated second data to the first radio access device over the air interface of the second radio access technology between the second radio access device and the UE and through the user plane channel, where the updated second data is data corresponding to the updated RB; and transmit updated first data to the first radio access device over the air interface of the first radio access technology between the first radio access device and the UE, where the updated first data is data except the updated second data in the data required to be transmitted between the network side and the UE; or,
a release module, configured to receive a message for releasing traffic offload configuration and sent by the first radio access device; determine not to transmit data to the second radio access device any more and send a message about completion of releasing traffic offload configuration to the first radio access device; and transmit, over the air interface of the first radio access technology between the first radio access device and the UE, the data required to be transmitted between the network side and the UE to the first radio access device; or,
a handover module, configured to receive, in a process that the UE hands over from a source second radio access device to a target second radio access device, a message for releasing traffic offload configuration and sent by the first radio access device, and send, after determining not to transmit data to the source second radio access device any more, a message about completion of releasing traffic offload configuration to the first radio access device; or, receive a message for modifying traffic offload configuration sent by the first radio access device, where the message for modifying traffic offload configuration includes information about a source second radio access device and information about a target second radio access device, and send, after releasing an association with the source second radio access device and establishing an association with the target second radio access device, a message about completion of modifying traffic offload configuration to the first radio access device.

In this embodiment, air interface data is transmitted over an air interface of a first radio access technology and an air interface of a second radio access technology, so that transmission bandwidth on an air interface can be increased; and different radio access technologies are used, so that the problem that costs are relatively high because only the first radio access technology is used can be avoided and the problem that user experience is relatively poor because only the second radio access technology is used can be avoided.

It can be understood that for related features in the foregoing methods and devices, reference may be made to each other.

Persons of ordinary skill in the art may understand that all or a part of the steps in the method embodiments may be implemented by a program instructing relevant hardware. The program may be stored in a computer readable storage medium. When the program runs, the steps of the foregoing method embodiments are performed. The storage medium may be any medium that is capable of storing program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof as long as the modifications and replacements do not cause the essence of corresponding technical solutions to depart from the scope of the technical solutions of the embodiments of the present invention.

## Claims

1. A data transmission method, comprising:
determining (31), by a first radio access device, a user equipment UE on which traffic offload is required, and sending a traffic offload configuration message to the UE, so that after receiving the traffic offload configuration message, the UE acquires information about a radio bearer RB on which traffic offload can be performed, wherein data that requires traffic offload and is a part of data of the RB on which traffic offload can be performed is called second data, wherein the second data is a part of data required to be transmitted between a network side and the UE, and the other part of the data required to be transmitted is called first data;
receiving (32), by the first radio access device, a traffic offload configuration completion message sent by the UE, wherein the traffic offload configuration completion message comprises information about a second radio access device associated with the UE;
establishing (33), by the first radio access device, a user plane channel between the first radio access device and the second radio access device according to the information about the second radio access device;
transmitting (34), by the first radio access device, the first data to the UE over an air interface of a first radio access technology between the first radio access device and the UE, wherein the first radio access technology is corresponding to the first radio access device; and
transmitting (35), by the first radio access device, the second data to the UE over an air interface of a second radio access technology between the second radio access device and the UE and through the user plane channel between the first radio access device and the second radio access device, wherein the second radio access technology is corresponding to the second radio access device,
**characterized in that**
after the sending a traffic offload configuration message to the UE, the method further comprises:
sending, by the first radio access device, a message for modifying traffic offload configuration to the UE, wherein the message for modifying traffic offload configuration comprises information about an updated RB on which traffic offload can be performed;
receiving, by the first radio access device, a message about completion of modifying traffic offload configuration sent by the UE, wherein the message about completion of modifying traffic offload configuration is sent by the UE after the UE completes configuration according to the information about the updated RB on which traffic offload can be performed;
transmitting, by the first radio access device, updated second data to the UE over the air interface of the second radio access technology between the second radio access device and the UE and through the user plane channel between the first radio access device and the second radio access device, wherein the updated second data is data corresponding to the updated RB; and
transmitting, by the first radio access device, updated first data to the UE over the air interface of the first radio access technology between the first radio access device and the UE, wherein the updated first data is data except the updated second data in the data required to be transmitted between the network side and the UE.

2. The method according to claim 1, further comprising:
retaining the user plane channel between the first radio access device and the second radio access device if at least one RB on which traffic offload can be performed exists.

3. A data transmission method, comprising:
receiving, by a user equipment UE, a traffic offload configuration message sent by a first radio access device;
acquiring, by the UE, information about a radio bearer RB on which traffic offload can be performed, wherein data that requires traffic offload and is a part of data corresponding to the RB on which traffic offload can be performed is called second data, wherein the second data is a part of data required to be transmitted between a network side and the UE, and the other part of the data required to be transmitted is called first data;
sending, by the UE, a traffic offload configuration completion message corresponding to the traffic offload configuration message to the first radio access device, wherein the traffic offload configuration completion message comprises information about a second radio access device associated with the UE, so that the first radio access device establishes a user plane channel between the first radio access device and the second radio access device according to the information about the second radio access device;
transmitting, by the UE, the first data to the first radio access device over an air interface of a first radio access technology between the first radio access device and the UE, wherein the first radio access technology is corresponding to the first radio access device; and
transmitting, by the UE, the second data to the first radio access device over an air interface of a second radio access technology between the second radio access device and the UE and through the user plane channel, wherein the second radio access technology is corresponding to the second radio access device
**characterized in that**
after the receiving a traffic offload configuration message sent by a first radio access device, further comprising:
receiving, by the UE, a message for releasing traffic offload configuration and sent by the first radio access device;
determining, by the UE, not to transmit data to the second radio access device any more, and sending a message about completion of releasing traffic offload configuration to the first radio access device; and
transmitting, by the UE to the first radio access device over the air interface of the first radio access technology between the first radio access device and the UE, the data required to be transmitted between the network side and the UE.

4. A radio access device, serving as a first radio access device, comprising:
a determining and sending module (111), configured to determine a user equipment UE on which traffic offload is required, and send a traffic offload configuration message to the UE, so that after receiving the traffic offload configuration message, the UE acquires information about a radio bearer RB on which traffic offload can be performed, wherein data that requires traffic offload and is a part of data corresponding to the RB on which traffic offload can be performed is called second data, wherein the second data is a part of data required to be transmitted between a network side and the UE, and the other part of the data required to be transmitted is called first data; a receiving module (112), configured to receive a traffic offload configuration completion message sent by the UE, wherein the traffic offload configuration completion message comprises information about a second radio access device associated with the UE;
an establishment module (113), configured to establish a user plane channel between the radio access device and the second radio access device according to the information about the second radio access device received by the receiving module (112);
a first transmission module (114), configured to transmit, over an air interface of a first radio access technology between the first radio access device and the UE, the first data determined by the determining and sending module (111) to the UE, wherein the first radio access technology is corresponding to the first radio access device; and
a second transmission module (115), configured to transmit, over an air interface of a second radio access technology between the second radio access device and the UE and through the user plane channel between the first radio access device and the second radio access device, the second data determined by the determining and sending module (111) to the UE, wherein the second radio access technology is corresponding to the second radio access device,
**characterized in that** the radio access device further comprises
a modification module, configured to send a message for modifying traffic offload configuration to the UE, wherein the message for modifying traffic offload configuration comprises information about an updated RB on which traffic offload can be performed; receive a message about completion of modifying traffic offload configuration sent by the UE, wherein the message about completion of modifying traffic offload configuration is sent by the UE after the UE completes configuration according to the information about the updated RB on which traffic offload can be performed; transmit updated second data to the UE over the air interface of the second radio access technology between the second radio access device and the UE and through the user plane channel between the first radio access device and the second radio access device, wherein the updated second data is data corresponding to the updated RB; and transmit updated first data to the UE over the air interface of the first radio access technology between the radio access device and the UE, wherein the updated first data is data except the updated second data in the data required to be transmitted between the network side and the UE.

5. The device according to a claim 4, further comprising:
a release module, configured to send, to the UE, a message for releasing traffic offload configuration; receive a message about completion of releasing traffic offload configuration sent by the UE, wherein the message about completion of releasing traffic offload configuration is sent by the UE after the UE determines not to transmit data to the second radio access device any more; and transmit, over the air interface of the first radio access technology between the radio access device and the UE, the data required to be transmitted between the network side and the UE to the UE;
or,
a handover module, configured to send, to the UE in a process that the UE hands over from a source second radio access device to a target second radio access device, a message for releasing traffic offload configuration; and receive a message about completion of releasing traffic offload configuration sent by the UE, wherein the message about completion of releasing traffic offload configuration is sent by the UE after the UE determines not to transmit data to the source second radio access device any more; or, send a message for modifying traffic offload configuration to the UE, wherein the message for modifying traffic offload configuration comprises information about a source second radio access device and information about a target second radio access device; and receive a message about completion of modifying traffic offload configuration sent by the UE, wherein the message about completion of modifying traffic offload configuration is sent by the UE after the UE releases an association with the source second radio access device and establishes an association with the target second radio access device.

6. A user equipment, comprising:
a receiving module (121), configured to receive a traffic offload configuration message sent by a first radio access device;
an acquiring module (122), configured to acquire information about a radio bearer RB on which traffic offload can be performed, wherein data that requires traffic offload and is a part of data corresponding to the RB on which traffic offload can be performed is called second data, wherein the second data is a part of data required to be transmitted between a network side and the UE, and the other part of the data required to be transmitted is called first data;
a sending module (123), configured to send a traffic offload configuration completion message corresponding to the traffic offload configuration message received by the receiving module (121) to the first radio access device, wherein the traffic offload configuration completion message comprises information about a second radio access device associated with the UE, so that the first radio access device establishes a user plane channel between the first radio access device and the second radio access device according to the information about the second radio access device;
a first transmission module (124), configured to transmit, over an air interface of a first radio access technology between the first radio access device and the user equipment UE, the first data determined by the acquiring module (122) to the first radio access device, wherein the first radio access technology is corresponding to the first radio access device; and
a second transmission module (125), configured to transmit, over an air interface of a second radio access technology between the second radio access device and the UE and through the user plane channel, the second data determined by the acquiring module (122) to the first radio access device, wherein the second radio access technology is corresponding to the second radio access device,
**characterized in that** the user equipment further comprises
a modification module, configured to receive a message for modifying traffic offload configuration of the first radio access device, wherein the message for modifying traffic offload configuration comprises information about an updated RB on which traffic offload can be performed; send, after the configuration is updated according to the information about the updated RB on which traffic offload can be performed, a message about completion of modifying traffic offload configuration to the first radio access device; transmit updated second data to the first radio access device over the air interface of the second radio access technology between the second radio access device and the UE and through the user plane channel, wherein the updated second data is data corresponding to the updated RB; and transmit updated first data to the first radio access device over the air interface of the first radio access technology between the first radio access device and the UE, wherein the updated first data is data except the updated second data in the data required to be transmitted between the network side and the UE.

7. The user equipment according to claim 6, further comprising:
a release module, configured to receive a message for releasing traffic offload configuration and sent by the first radio access device; determine not to transmit data to the second radio access device any more and send a message about completion of releasing traffic offload configuration to the first radio access device; and transmit, over the air interface of the first radio access technology between the first radio access device and the UE, the data required to be transmitted between the network side and the UE to the first radio access device;
or,
a handover module, configured to receive, in a process that the UE hands over from a source second radio access device to a target second radio access device, a message for releasing traffic offload configuration and sent by the first radio access device, and send, after determining not to transmit data to the source second radio access device any more, a message about completion of releasing traffic offload configuration to the first radio access device; or, receive a message for modifying traffic offload configuration sent by the first radio access device, wherein the message for modifying traffic offload configuration comprises information about a source second radio access device and information about a target second radio access device, and send, after releasing an association with the source second radio access device and establishing an association with the target second radio access device, a message about completion of modifying traffic offload configuration to the first radio access device.

## Patentansprüche

1. Datenübertragungsverfahren, umfassend;
Bestimmen (31), durch eine erste Funkzugangseinrichtung, einer Benutzereinrichtung (User Equipment, UE), auf der eine Verkehrsentladung erforderlich ist, und Senden einer Verkehrsentladungs-Konfigurationsnachricht an die UE, sodass die UE nach Erhalt der Verkehrsentladungs-Konfigurationsnachricht Informationen über einen Funkträger (Radio Bearer, RB) erhält, auf dem eine Verkehrsentladung durchgeführt werden kann, wobei Daten, die eine Verkehrsentladung erfordern und ein Teil der Daten des RB, auf dem eine Verkehrsentladung durchgeführt werden kann, sind, als zweite Daten bezeichnet werden, wobei die zweiten Daten ein Teil der Daten sind, deren Übertragung zwischen einer Netzwerkseite und der UE erforderlich ist, und der andere Teil der zu übertragenden Daten als erste Daten bezeichnet wird;
Empfangen (32), durch die erste Funkzugangseinrichtung, einer von der UE gesendeten Verkehrsentladungs-Konfigurationsfertigstellungsnachricht, wobei die Verkehrsentladungs-Konfigurationsfertigstellungsnachricht Informationen über eine zweite der UE zugeordneten Funkzugangseinrichtung umfasst;
Herstellen (33), durch die erste Funkzugangseinrichtung, eines Benutzerebenenkanals zwischen der ersten Funkzugangseinrichtung und der zweiten Funkzugangseinrichtung gemäß den Informationen über die zweite Funkzugangseinrichtung;
Übertragen (34), durch die erste Funkzugangseinrichtung, der ersten Daten an die UE über eine Funkschnittstelle einer ersten Funkzugangstechnologie zwischen der ersten Funkzugangseinrichtung und der UE, wobei die erste Funkzugangstechnologie der ersten Funkzugangseinrichtung entspricht; und Übertragen (35), durch die erste Funkzugangseinrichtung, der zweiten Daten an die UE über eine Funkschnittstelle einer zweiten Funkzugangstechnologie zwischen der zweiten Funkzugangseinrichtung und der UE und durch den Benutzerebenenkanal zwischen der ersten Funkzugangseinrichtung und der zweiten Funkzugangseinrichtung, wobei die zweite Funkzugangstechnologie der zweiten Funkzugangseinrichtung entspricht,
**dadurch gekennzeichnet, dass** das Verfahren nach dem Senden einer Verkehrsentladungs-Konfigurationsnachricht an die UE ferner umfasst:
Senden, durch die erste Funkzugangseinrichtung, einer Nachricht zum Modifizieren der Verkehrsentladungskonfiguration an die UE, wobei die Nachricht zum Modifizieren der Verkehrsentladungskonfiguration Informationen über einen aktualisierten RB enthält, auf dem eine Verkehrsentladung durchgeführt werden kann;
Empfangen, durch die erste Funkzugangseinrichtung, einer von der UE gesendeten Nachricht über die Fertigstellung der Modifizierung der Verkehrsentladungskonfiguration, wobei die Nachricht über die Fertigstellung der Modifizierung der Verkehrsentladungskonfiguration von der UE gesendet wird, nachdem die UE die Konfiguration entsprechend den Informationen über den aktualisierten RB, auf dem eine Verkehrsentladung durchgeführt werden kann, fertiggestellt hat;
Übertragen, durch die erste Funkzugangseinrichtung, der aktualisierten zweiten Daten an die UE über die Funkschnittstelle der zweiten Funkzugangstechnologie zwischen der zweiten Funkzugangseinrichtung und der UE und durch den Benutzerebenenkanal zwischen der ersten Funkzugangseinrichtung und der zweiten Funkzugangseinrichtung, wobei die aktualisierten zweiten Daten dem aktualisierten RB entsprechen; und
Übertragen, durch die erste Funkzugangseinrichtung, der aktualisierten ersten Daten an die UE über die Funkschnittstelle der ersten Funkzugangstechnologie zwischen der ersten Funkzugangseinrichtung und der UE, wobei die aktualisierten ersten Daten Daten mit Ausnahme der aktualisierten zweiten Daten in den Daten sind, die zwischen der Netzwerkseite und der UE zu übertragen sind.

2. Verfahren nach Anspruch 1, ferner umfassend:
Behalten des Benutzerebenenkanals zwischen der ersten Funkzugangseinrichtung und der zweiten Funkzugangseinrichtung, wenn mindestens ein RB vorhanden ist, auf dem eine Verkehrsentladung durchgeführt werden kann.

3. Datenübertragungsverfahren, umfassend:
Empfangen, durch eine Benutzereinrichtung (User Equipment, UE), einer von einer ersten Funkzugangseinrichtung gesendeten Verkehrsentladungs-Konfigurationsnachricht;
Erhalten, durch die UE, von Informationen über einen Funkträger (Radio Bearer, RB), auf dem eine Verkehrsentladung durchgeführt werden kann, wobei Daten, für die eine Verkehrsentladung erforderlich ist und die ein Teil der Daten sind, die dem RB entsprechen, auf dem eine Verkehrsentladung durchgeführt werden kann, als zweite Daten bezeichnet werden, wobei die zweiten Daten ein Teil der Daten sind, deren Übertragung zwischen einer Netzwerkseite und der UE erforderlich ist, und der andere Teil der Daten, deren Übertragung erforderlich ist, als erste Daten bezeichnet wird;
Senden, durch die UE, einer Verkehrsentladungs-Konfigurationsfertigstellungsnachricht, welche der Verkehrsentladungs-Konfigurationsnachricht entspricht, an die erste Funkzugangseinrichtung, wobei die Verkehrsentladungs-Konfigurationsfertigstellungsnachricht Informationen über eine zweite Funkzugangseinrichtung enthält, die der UE zugeordnet ist, sodass die erste Funkzugangseinrichtung einen Benutzerebenenkanal zwischen der ersten Funkzugangseinrichtung und der zweiten Funkzugangseinrichtung gemäß den Informationen über die zweite Funkzugangseinrichtung herstellt;
Übertragen, durch die UE, der ersten Daten an die erste Funkzugangseinrichtung über eine Funkschnittstelle einer ersten Funkzugangstechnologie zwischen der ersten Funkzugangseinrichtung und der UE, wobei die erste Funkzugangstechnologie der ersten Funkzugangseinrichtung entspricht; und
Übertragen, durch die UE, der zweiten Daten an die erste Funkzugangseinrichtung über eine Funkschnittstelle einer zweiten Funkzugangstechnologie zwischen der zweiten Funkzugangseinrichtung und der UE und durch den Benutzerebenenkanal, wobei die zweite Funkzugangstechnologie der zweiten Funkzugangseinrichtung entspricht;
**dadurch gekennzeichnet, dass** das Verfahren nach dem Empfangen einer Verkehrsentladungs-Konfigurationsnachricht, die von einer ersten Funkzugangseinrichtung gesendet wird, ferner umfasst:
Empfangen, durch die UE, einer Nachricht zum Freigeben der Verkehrsentladungskonfiguration, die von der ersten Funkzugangseinrichtung gesendet wird;
Bestimmen, durch die UE, dass keine Daten an die zweite Funkzugangseinrichtung mehr übertragen werden, und Senden einer Nachricht über die Fertigstellung der Freigabe der Verkehrsentladungskonfiguration an die erste Funkzugangseinrichtung; und
Übertragen, durch die UE an die erste Funkzugangseinrichtung über die Funkschnittstelle der ersten Funkzugangstechnologie zwischen der ersten Funkzugangseinrichtung und der UE, der zwischen der Netzwerkseite und der UE zu übertragenden Daten.

4. Funkzugangseinrichtung, die als eine erste Funkzugangseinrichtung dient, umfassend:
ein Bestimmungs- und Sendemodul (111), das konfiguriert ist, um eine Benutzereinrichtung (User Equipment, UE) zu bestimmen, auf der eine Verkehrsentladung erforderlich ist, und eine Verkehrsentladungs-Konfigurationsnachricht an die UE zu senden, sodass die UE nach Erhalt der Verkehrsentladungs-Konfigurationsnachricht Informationen über einen Funkträger (Radio Bearer, RB) erhält, auf dem eine Verkehrsentladung durchgeführt werden kann, wobei Daten, die eine Verkehrsentladung erfordern und ein Teil der Daten, die dem RB entsprechen, auf dem eine Verkehrsentladung durchgeführt werden kann, sind, als zweite Daten bezeichnet werden, wobei die zweiten Daten ein Teil der Daten sind, deren Übertragung zwischen einer Netzwerkseite und der UE erforderlich ist, und der andere Teil der zu übertragenden Daten als erste Daten bezeichnet wird;
ein Empfangsmodul (112), das konfiguriert ist, um eine von der UE gesendete Verkehrsentladungs-Konfigurationsfertigstellungsnachricht zu empfangen, wobei die Verkehrsentladungs-Konfigurationsfertigstellungsnachricht Informationen über eine zweite der UE zugeordneten Funkzugangseinrichtung umfasst;
ein Herstellungsmodul (113), das konfiguriert ist, um einen Benutzerebenenkanal zwischen der Funkzugangseinrichtung und der zweiten Funkzugangseinrichtung gemäß den Informationen über die zweite Funkzugangseinrichtung herzustellen, die von dem Empfangsmodul (112) empfangen werden;
ein erstes Übertragungsmodul (114), das konfiguriert ist, um über eine Funkschnittstelle einer ersten Funkzugangstechnologie zwischen der ersten Funkzugangseinrichtung und der UE die ersten Daten, die von dem Bestimmungs- und Sendemodul (111) bestimmt werden, an die UE zu übertragen, wobei die erste Funkzugangstechnologie der ersten Funkzugangseinrichtung entspricht; und
ein zweites Übertragungsmodul (115), das konfiguriert ist, um über eine Funkschnittstelle einer zweiten Funkzugangstechnologie zwischen der zweiten Funkzugangseinrichtung und der UE und durch den Benutzerebenenkanal zwischen der ersten Funkzugangseinrichtung und der zweiten Funkzugangseinrichtung die zweiten Daten, die von dem Bestimmungs- und Sendemodul (111) bestimmt werden, an die UE zu übertragen, wobei die zweite Funkzugangstechnologie der zweiten Funkzugangseinrichtung entspricht,
**dadurch gekennzeichnet, dass** die Funkzugangseinrichtung ferner ein Modifizierungsmodul umfasst, das konfiguriert ist, um eine Nachricht zum Modifizieren der Verkehrsentladungskonfiguration an die UE zu senden, wobei die Nachricht zum Modifizieren der Verkehrsentladungskonfiguration Informationen über einen aktualisierten RB umfasst, auf dem eine Verkehrsentladung durchgeführt werden kann; eine von der UE gesendete Nachricht über die Fertigstellung der Modifizierung der Verkehrsentladungskonfiguration zu empfangen, wobei die Nachricht über die Fertigstellung der Modifizierung der Verkehrsentladungskonfiguration von der UE gesendet wird, nachdem die UE die Konfiguration entsprechend den Informationen über den aktualisierten RB, auf dem eine Verkehrsentladung durchgeführt werden kann, fertiggestellt hat; aktualisierte zweite Daten an die UE über die Funkschnittstelle der zweiten Funkzugangstechnologie zwischen der zweiten Funkzugangseinrichtung und der UE und durch den Benutzerebenenkanal zwischen der ersten Funkzugangseinrichtung und der zweiten Funkzugangseinrichtung zu übertragen, wobei die aktualisierten zweiten Daten Daten sind, die dem aktualisierten RB entsprechen; und aktualisierte erste Daten an die UE über die Funkschnittstelle der ersten Funkzugangstechnologie zwischen der Funkzugangseinrichtung und der UE zu übertragen, wobei die aktualisierten ersten Daten Daten mit Ausnahme der aktualisierten zweiten Daten in den Daten sind, die zwischen der Netzwerkseite und der UE zu übertragen sind.

5. Vorrichtung nach Anspruch 4, ferner umfassend:
ein Freigabemodul, das konfiguriert ist, um eine Nachricht zum Freigeben der Verkehrsentladungskonfiguration an die UE zu senden; eine Nachricht über die Fertigstellung der Freigabe der Verkehrsentladungskonfiguration zu empfangen, die von der UE gesendet wird, wobei die Nachricht über die Fertigstellung der Freigabe der Verkehrsentladungskonfiguration von der UE gesendet wird, nachdem die UE bestimmt hat, keine Daten mehr an die zweite Funkzugangseinrichtung zu übertragen; und über die Funkschnittstelle der ersten Funkzugangstechnologie zwischen der Funkzugangseinrichtung und der UE die Daten zu übertragen, deren Übertragung zwischen der Netzwerkseite und der UE an die UE erforderlich ist; oder,
ein Übergabemodul, das konfiguriert ist, um in einem Prozess, den die UE von einer zweiten Quell-Funkzugangseinrichtung an eine zweite Ziel-Funkzugangseinrichtung übergibt, eine Nachricht zum Freigeben der Verkehrsentladungskonfiguration an die UE zu senden; und eine Nachricht über die Fertigstellung der Freigabe der Verkehrsentladungskonfiguration zu empfangen, die von der UE gesendet wird, wobei die Nachricht über die Fertigstellung der Freigabe der Verkehrsentladungskonfiguration von der UE gesendet wird, nachdem die UE bestimmt hat, keine Daten mehr an die zweite Quell-Funkzugangseinrichtung zu übertragen; oder eine Nachricht zum Modifizieren der Verkehrsentladungskonfiguration an die UE zu senden, wobei die Nachricht zum Modifizieren der Verkehrsentladungskonfiguration Informationen über eine zweite Quell-Funkzugangseinrichtung und Informationen über eine zweite Ziel-Funkzugangseinrichtung umfasst; und eine von der UE gesendete Nachricht über die Fertigstellung der Modifizierung der Verkehrsentladungskonfiguration zu empfangen, wobei die Nachricht über die Fertigstellung der Modifizierung der Verkehrsentladungskonfiguration von der UE gesendet wird, nachdem die UE eine Zuordnung zu der zweiten Quell-Funkzugangseinrichtung freigibt und eine Zuordnung zu der zweiten Ziel-Funkzugangseinrichtung herstellt.

6. Benutzereinrichtung, umfassend:
ein Empfangsmodul (121), das konfiguriert ist, um eine von einer ersten Funkzugangseinrichtung gesendete Verkehrsentladungs-Konfigurationsnachricht zu empfangen;
ein Erfassungsmodul (122), das konfiguriert ist, um Informationen über einen Funkträger (Radio Bearer, RB) zu erfassen, auf dem eine Verkehrsentladung durchgeführt werden kann, wobei Daten, die eine Verkehrsentladung erfordern und ein Teil der Daten, die dem RB entsprechen, auf dem eine Verkehrsentladung durchgeführt werden kann, sind, als zweite Daten bezeichnet werden, wobei die zweiten Daten ein Teil der Daten sind, deren Übertragung zwischen einer Netzwerkseite und der UE erforderlich ist, und der andere Teil der zu übertragenden Daten als erste Daten bezeichnet wird;
ein Sendemodul (123), das konfiguriert ist, um eine Verkehrsentladungs-Konfigurationsfertigstellungsnachricht, welche der Verkehrsentladungs-Konfigurationsnachricht, die von dem Empfangsmodul (121) empfangen wird, entspricht, an die erste Funkzugangseinrichtung zu senden, wobei die Verkehrsentladungs-Konfigurationsfertigstellungsnachricht Informationen über eine zweite Funkzugangseinrichtung enthält, die der UE zugeordnet ist, sodass die erste Funkzugangseinrichtung einen Benutzerebenenkanal zwischen der ersten Funkzugangseinrichtung und der zweiten Funkzugangseinrichtung gemäß den Informationen über die zweite Funkzugangseinrichtung herstellt;
ein erstes Übertragungsmodul (124), das konfiguriert ist, um über eine Funkschnittstelle einer ersten Funkzugangstechnologie zwischen der ersten Funkzugangseinrichtung und der Benutzereinrichtung (User Equipment, UE) die ersten Daten, die von dem Erfassungsmodul (122) bestimmt werden, an die erste Funkzugangseinrichtung zu übertragen, wobei die erste Funkzugangstechnologie der ersten Funkzugangseinrichtung entspricht; und
ein zweites Übertragungsmodul (125), das konfiguriert ist, um über eine Funkschnittstelle einer zweiten Funkzugangstechnologie zwischen der zweiten Funkzugangseinrichtung und der UE und durch den Benutzerebenenkanal die zweiten Daten, die von dem Erfassungsmodul (122) bestimmt werden, an die erste Funkzugangseinrichtung zu übertragen, wobei die zweite Funkzugangstechnologie der zweiten Funkzugangseinrichtung entspricht,
**dadurch gekennzeichnet, dass** die Benutzereinrichtung ferner umfasst
ein Modifikationsmodul, das konfiguriert ist, um eine Nachricht zum Modifizieren der Verkehrsentladungskonfiguration der ersten Funkzugangseinrichtung zu empfangen, wobei die Nachricht zum Modifizieren der Verkehrsentladungskonfiguration Informationen über einen aktualisierten RB umfasst, auf dem eine Verkehrsentladung durchgeführt werden kann; nachdem die Konfiguration gemäß der Informationen über den aktualisierten RB, auf dem eine Verkehrsentladung durchgeführt werden kann, aktualisiert wird, eine Nachricht über die Fertigstellung der Modifizierung der Verkehrsentladungskonfiguration an die erste Funkzugangseinrichtung zu senden; die aktualisierten zweiten Daten an die erste Funkzugangseinrichtung über die Funkschnittstelle der zweiten Funkzugangstechnologie zwischen der zweiten Funkzugangseinrichtung und der UE und durch den Benutzerebenenkanal zu senden, wobei die aktualisierten zweiten Daten Daten sind, die dem aktualisierten RB entsprechen; und aktualisierte erste Daten an die erste Funkzugangseinrichtung über die Funkschnittstelle der ersten Funkzugangstechnologie zwischen der ersten Funkzugangseinrichtung und der UE zu übertragen, wobei die aktualisierten ersten Daten Daten mit Ausnahme der aktualisierten zweiten Daten in den Daten sind, die zwischen der Netzwerkseite und der UE zu übertragen sind.

7. Benutzergerät nach Anspruch 6, ferner umfassend:
ein Freigabemodul, das konfiguriert ist, um eine Nachricht über die Freigabe der Verkehrsentladungskonfiguration zu empfangen, die durch die erste Funkzugangseinrichtung gesendet wird; zu bestimmen, dass keine Daten an die zweite Funkzugangseinrichtung mehr übertragen werden, und eine Nachricht über die Fertigstellung der Freigabe der Verkehrsentladungskonfiguration an die erste Funkzugriffseinrichtung zu senden; und über die Funkschnittstelle der ersten Funkzugangstechnologie zwischen der ersten Funkzugangseinrichtung und der UE die Daten, die zwischen der Netzwerkseite und der UE zu übertragen sind, an die erste Funkzugangseinrichtung zu übertragen; oder,
ein Übergabemodul, das konfiguriert ist, um in einem Prozess, den die UE von einer zweiten Quell-Funkzugangseinrichtung an eine zweite Ziel-Funkzugangsvorrichtung übergibt, eine Nachricht über die Freigabe der Verkehrsentladungskonfiguration zu empfangen, die von der ersten Funkzugangseinrichtung gesendet wird, und nach dem Bestimmen, dass keine Daten an die zweite Quell-Funkzugangseinrichtung mehr übertragen werden, eine Nachricht über die Fertigstellung der Freigabe der Verkehrsentladungskonfiguration an die erste Funkzugangseinrichtung zu senden; oder eine von der ersten Funkzugangseinrichtung gesendete Nachricht zum Modifizieren der Verkehrsentladungskonfiguration zu empfangen, wobei die Nachricht zum Modifizieren der Verkehrsentladungskonfiguration Informationen über eine zweite Quell-Funkzugangseinrichtung und Informationen über eine zweite Ziel-Funkzugangseinrichtung umfasst, und nach dem Freigeben einer Zuordnung zu der zweiten Quell-Funkzugangseinrichtung und dem Herstellen einer Zuordnung mit der zweiten Ziel-Funkzugangseinrichtung eine Nachricht über die Fertigstellung der Modifizierung der Verkehrsentladungskonfiguration an die erste Funkzugangseinrichtung zu senden.

## Revendications

1. Procédé de transmission de données, comprenant les étapes suivantes :
détermination (31), par un premier dispositif d'accès radio, d'un équipement utilisateur UE devant faire l'objet d'un délestage de trafic, et envoi à l'UE d'un message de configuration de délestage de trafic, de sorte que, suite à la réception du message de configuration de délestage de trafic, l'UE acquière des informations concernant un support radio RB sur lequel peut être mis en oeuvre un délestage de trafic, les données devant faire l'objet d'un délestage de trafic et constituant une partie de données du RB sur lequel peut être mis en oeuvre un délestage de trafic portant le nom de deuxièmes données, les deuxièmes données constituant une partie de données devant être transmises entre un côté réseau et l'UE, et l'autre partie des données devant être transmises portant le nom de premières données ;
réception (32), par le premier dispositif d'accès radio, d'un message d'achèvement de configuration de délestage de trafic envoyé par l'UE, le message d'achèvement de configuration de délestage de trafic comprenant des informations concernant un deuxième dispositif d'accès radio associé à l'UE ;
établissement (33), par le premier dispositif d'accès radio, d'un canal du plan utilisateur entre le premier dispositif d'accès radio et le deuxième dispositif d'accès radio selon les informations concernant le deuxième dispositif d'accès radio ;
transmission (34), par le premier dispositif d'accès radio, à l'UE des premières données via une interface air d'une première technologie d'accès radio entre le premier dispositif d'accès radio et l'UE, la première technologie d'accès radio correspondant au premier dispositif d'accès radio ; et
transmission (35), par le premier dispositif d'accès radio, à l'UE des deuxièmes données via une interface air d'une deuxième technologie d'accès radio entre le deuxième dispositif d'accès radio et l'UE et par l'intermédiaire du canal du plan utilisateur entre le premier dispositif d'accès radio et le deuxième dispositif d'accès radio, la deuxième technologie d'accès radio correspondant au deuxième dispositif d'accès radio,
le procédé étant **caractérisé en ce que**
suite à l'envoi à l'UE d'un message de configuration de délestage de trafic, il comprend en outre les étapes suivantes :
envoi, par le premier dispositif d'accès radio, à l'UE d'un message de modification de configuration de délestage de trafic, le message de modification de configuration de délestage de trafic comprenant des informations concernant un RB actualisé sur lequel peut être mis en oeuvre un délestage de trafic ;
réception, par le premier dispositif d'accès radio, d'un message d'achèvement de modification de configuration de délestage de trafic envoyé par l'UE, le message d'achèvement de modification de configuration de délestage de trafic étant envoyé par l'UE suite à l'achèvement de la configuration par l'UE selon les informations concernant le RB actualisé sur lequel peut être mis en oeuvre un délestage de trafic ;
transmission, par le premier dispositif d'accès radio, à l'UE de deuxièmes données actualisées via l'interface air de la deuxième technologie d'accès radio entre le deuxième dispositif d'accès radio et l'UE et par l'intermédiaire du canal du plan utilisateur entre le premier dispositif d'accès radio et le deuxième dispositif d'accès radio, les deuxièmes données actualisées constituant des données correspondant au RB actualisé ; et
transmission, par le premier dispositif d'accès radio, à l'UE de premières données actualisées via l'interface air de la première technologie d'accès radio entre le premier dispositif d'accès radio et l'UE, les premières données actualisées constituant des données excluant les deuxièmes données actualisées dans les données devant être transmises entre le côté réseau et l'UE.

2. Procédé selon la revendication 1, comprenant en outre l'étape suivante :
maintien du canal du plan utilisateur entre le premier dispositif d'accès radio et le deuxième dispositif d'accès radio s'il existe au moins un RB sur lequel peut être mis en oeuvre un délestage de trafic.

3. Procédé de transmission de données, comprenant les étapes suivantes :
réception, par un équipement utilisateur UE, d'un message de configuration de délestage de trafic envoyé par un premier dispositif d'accès radio ;
acquisition, par l'UE, d'informations concernant un support radio RB sur lequel peut être mis en oeuvre un délestage de trafic, les données devant faire l'objet d'un délestage de trafic et constituant une partie de données correspondant au RB sur lequel peut être mis en oeuvre un délestage de trafic portant le nom de deuxièmes données, les deuxièmes données constituant une partie de données devant être transmises entre un côté réseau et l'UE, et l'autre partie des données devant être transmises portant le nom de premières données ;
envoi, par l'UE, au premier dispositif d'accès radio d'un message d'achèvement de configuration de délestage de trafic correspondant au message de configuration de délestage de trafic, le message d'achèvement de configuration de délestage de trafic comprenant des informations concernant un deuxième dispositif d'accès radio associé à l'UE, de sorte que le premier dispositif d'accès radio établisse un canal du plan utilisateur entre le premier dispositif d'accès radio et le deuxième dispositif d'accès radio selon les informations concernant le deuxième dispositif d'accès radio ;
transmission, par l'UE, au premier dispositif d'accès radio des premières données via une interface air d'une première technologie d'accès radio entre le premier dispositif d'accès radio et l'UE, la première technologie d'accès radio correspondant au premier dispositif d'accès radio ; et
transmission, par l'UE, au premier dispositif d'accès radio des deuxièmes données via une interface air d'une deuxième technologie d'accès radio entre le deuxième dispositif d'accès radio et l'UE et par l'intermédiaire du canal du plan utilisateur, la deuxième technologie d'accès radio correspondant au deuxième dispositif d'accès radio,
le procédé étant **caractérisé en ce que**
suite à la réception d'un message de configuration de délestage de trafic envoyé par un premier dispositif d'accès radio, il comprend en outre les étapes suivantes :
réception, par l'UE, d'un message de libération de configuration de délestage de trafic envoyé par le premier dispositif d'accès radio ;
détermination, par l'UE, de ne plus transmettre de données au deuxième dispositif d'accès radio, et envoi au premier dispositif d'accès radio d'un message d'achèvement de libération de configuration de délestage de trafic ; et
transmission, par l'UE au premier dispositif d'accès radio via l'interface air de la première technologie d'accès radio entre le premier dispositif d'accès radio et l'UE, des données devant être transmises entre le côté réseau et l'UE.

4. Dispositif d'accès radio, jouant le rôle d'un premier dispositif d'accès radio, comprenant :
un module de détermination et d'envoi (111), configuré pour déterminer un équipement utilisateur UE devant faire l'objet d'un délestage de trafic, et envoyer à l'UE un message de configuration de délestage de trafic, de sorte que, suite à la réception du message de configuration de délestage de trafic, l'UE acquière des informations concernant un support radio RB sur lequel peut être mis en oeuvre un délestage de trafic, les données devant faire l'objet d'un délestage de trafic et constituant une partie de données correspondant au RB sur lequel peut être mis en oeuvre un délestage de trafic portant le nom de deuxièmes données, les deuxièmes données constituant une partie de données devant être transmises entre un côté réseau et l'UE, et l'autre partie des données devant être transmises portant le nom de premières données ;
un module de réception (112), configuré pour recevoir un message d'achèvement de configuration de délestage de trafic envoyé par l'UE, le message d'achèvement de configuration de délestage de trafic comprenant des informations concernant un deuxième dispositif d'accès radio associé à l'UE ;
un module d'établissement (113), configuré pour établir un canal du plan utilisateur entre le dispositif d'accès radio et le deuxième dispositif d'accès radio selon les informations concernant le deuxième dispositif d'accès radio reçues par le module de réception (112) ;
un premier module de transmission (114), configuré pour transmettre à l'UE, via une interface air d'une première technologie d'accès radio entre le premier dispositif d'accès radio et l'UE, les premières données déterminées par le module de détermination et d'envoi (111), la première technologie d'accès radio correspondant au premier dispositif d'accès radio ; et
un deuxième module de transmission (115), configuré pour transmettre à l'UE, via une interface air d'une deuxième technologie d'accès radio entre le deuxième dispositif d'accès radio et l'UE et par l'intermédiaire du canal du plan utilisateur entre le premier dispositif d'accès radio et le deuxième dispositif d'accès radio, les deuxièmes données déterminées par le module de détermination et d'envoi (111), la deuxième technologie d'accès radio correspondant au deuxième dispositif d'accès radio,
le dispositif d'accès radio étant **caractérisé en ce qu'**il comprend en outre
un module de modification, configuré pour envoyer à l'UE un message de modification de configuration de délestage de trafic, le message de modification de configuration de délestage de trafic comprenant des informations concernant un RB actualisé sur lequel peut être mis en oeuvre un délestage de trafic ; recevoir un message d'achèvement de modification de configuration de délestage de trafic envoyé par l'UE, le message d'achèvement de modification de configuration de délestage de trafic étant envoyé par l'UE suite à l'achèvement de la configuration par l'UE selon les informations concernant le RB actualisé sur lequel peut être mis en oeuvre un délestage de trafic ; transmettre à l'UE des deuxièmes données actualisées via l'interface air de la deuxième technologie d'accès radio entre le deuxième dispositif d'accès radio et l'UE et par l'intermédiaire du canal du plan utilisateur entre le premier dispositif d'accès radio et le deuxième dispositif d'accès radio, les deuxièmes données actualisées constituant des données correspondant au RB actualisé ; et transmettre à l'UE des premières données actualisées via l'interface air de la première technologie d'accès radio entre le dispositif d'accès radio et l'UE, les premières données actualisées constituant des données excluant les deuxièmes données actualisées dans les données devant être transmises entre le côté réseau et l'UE.

5. Dispositif selon la revendication 4, comprenant en outre :
un module de libération, configuré pour envoyer à l'UE un message de libération de configuration de délestage de trafic ; recevoir un message d'achèvement de libération de configuration de délestage de trafic envoyé par l'UE, le message d'achèvement de libération de configuration de délestage de trafic étant envoyé par l'UE suite à la détermination, par l'UE, de ne plus transmettre de données au deuxième dispositif d'accès radio ; et transmettre à l'UE, via l'interface air de la première technologie d'accès radio entre le dispositif d'accès radio et l'UE, les données devant être transmises entre le côté réseau et l'UE ;
ou,
un module de transfert, configuré pour envoyer à l'UE, dans un processus de transfert de l'UE d'un deuxième dispositif d'accès radio source vers un deuxième dispositif d'accès radio cible, un message de libération de configuration de délestage de trafic ; et recevoir un message d'achèvement de libération de configuration de délestage de trafic envoyé par l'UE, le message d'achèvement de libération de configuration de délestage de trafic étant envoyé par l'UE suite à la détermination, par l'UE, de ne plus transmettre de données au deuxième dispositif d'accès radio source ; ou, envoyer à l'UE un message de modification de configuration de délestage de trafic, le message de modification de configuration de délestage de trafic comprenant des informations concernant un deuxième dispositif d'accès radio source et des informations concernant un deuxième dispositif d'accès radio cible ; et recevoir un message d'achèvement de modification de configuration de délestage de trafic envoyé par l'UE, le message d'achèvement de modification de configuration de délestage de trafic étant envoyé par l'UE suite à la libération, par l'UE, d'une association avec le deuxième dispositif d'accès radio source et à l'établissement, par l'UE, d'une association avec le deuxième dispositif d'accès radio cible.

6. Equipement utilisateur, comprenant :
un module de réception (121), configuré pour recevoir un message de configuration de délestage de trafic envoyé par un premier dispositif d'accès radio ;
un module d'acquisition (122), configuré pour acquérir des informations concernant un support radio RB sur lequel peut être mis en oeuvre un délestage de trafic, les données devant faire l'objet d'un délestage de trafic et constituant une partie de données correspondant au RB sur lequel peut être mis en oeuvre un délestage de trafic portant le nom de deuxièmes données, les deuxièmes données constituant une partie de données devant être transmises entre un côté réseau et l'UE, et l'autre partie des données devant être transmises portant le nom de premières données ;
un module d'envoi (123), configuré pour envoyer au premier dispositif d'accès radio un message d'achèvement de configuration de délestage de trafic correspondant au message de configuration de délestage de trafic reçu par le module de réception (121), le message d'achèvement de configuration de délestage de trafic comprenant des informations concernant un deuxième dispositif d'accès radio associé à l'UE, de sorte que le premier dispositif d'accès radio établisse un canal du plan utilisateur entre le premier dispositif d'accès radio et le deuxième dispositif d'accès radio selon les informations concernant le deuxième dispositif d'accès radio ;
un premier module de transmission (124), configuré pour transmettre au premier dispositif d'accès radio, via une interface air d'une première technologie d'accès radio entre le premier dispositif d'accès radio et l'équipement utilisateur UE, les premières données déterminées par le module d'acquisition (122), la première technologie d'accès radio correspondant au premier dispositif d'accès radio ; et
un deuxième module de transmission (125), configuré pour transmettre au premier dispositif d'accès radio, via une interface air d'une deuxième technologie d'accès radio entre le deuxième dispositif d'accès radio et l'UE et par l'intermédiaire du canal du plan utilisateur, les deuxièmes données déterminées par le module d'acquisition (122), la deuxième technologie d'accès radio correspondant au deuxième dispositif d'accès radio,
l'équipement utilisateur étant **caractérisé en ce qu'**il comprend en outre un module de modification, configuré pour recevoir un message de modification de configuration de délestage de trafic du premier dispositif d'accès radio, le message de modification de configuration de délestage de trafic comprenant des informations concernant un RB actualisé sur lequel peut être mis en oeuvre un délestage de trafic ; envoyer au premier dispositif d'accès radio, suite à l'actualisation de la configuration selon les informations concernant le RB actualisé sur lequel peut être mis en oeuvre un délestage de trafic, un message d'achèvement de modification de configuration de délestage de trafic ; transmettre au premier dispositif d'accès radio des deuxièmes données actualisées via l'interface air de la deuxième technologie d'accès radio entre le deuxième dispositif d'accès radio et l'UE et par l'intermédiaire du canal du plan utilisateur, les deuxièmes données actualisées constituant des données correspondant au RB actualisé ; et transmettre au premier dispositif d'accès radio des premières données actualisées via l'interface air de la première technologie d'accès radio entre le premier dispositif d'accès radio et l'UE, les premières données actualisées constituant des données excluant les deuxièmes données actualisées dans les données devant être transmises entre le côté réseau et l'UE.

7. Equipement utilisateur selon la revendication 6, comprenant en outre :
un module de libération, configuré pour recevoir un message de libération de configuration de délestage de trafic envoyé par le premier dispositif d'accès radio ; déterminer de ne plus transmettre de données au deuxième dispositif d'accès radio et envoyer au premier dispositif d'accès radio un message d'achèvement de libération de configuration de délestage de trafic ; et transmettre au premier dispositif d'accès radio, via l'interface air de la première technologie d'accès radio entre le premier dispositif d'accès radio et l'UE, les données devant être transmises entre le côté réseau et l'UE ;
ou,
un module de transfert, configuré pour recevoir, dans un processus de transfert de l'UE d'un deuxième dispositif d'accès radio source vers un deuxième dispositif d'accès radio cible, un message de libération de configuration de délestage de trafic envoyé par le premier dispositif d'accès radio, et envoyer au premier dispositif d'accès radio, suite à la détermination de ne plus transmettre de données au deuxième dispositif d'accès radio source, un message d'achèvement de libération de configuration de délestage de trafic ; ou, recevoir un message de modification de configuration de délestage de trafic envoyé par le premier dispositif d'accès radio, le message de modification de configuration de délestage de trafic comprenant des informations concernant un deuxième dispositif d'accès radio source et des informations concernant un deuxième dispositif d'accès radio cible, et envoyer au premier dispositif d'accès radio, suite à la libération d'une association avec le deuxième dispositif d'accès radio source et à l'établissement d'une association avec le deuxième dispositif d'accès radio cible, un message d'achèvement de modification de configuration de délestage de trafic.
